# EUROPÄISCHE PATENTSCHRIFT

(11) **EP 3 067 229 B1**
(45) Veröffentlichungstag und Bekanntmachung des Hinweises auf die Patenterteilung: **15.04.2020**
(21) Anmeldenummer: 16165485.0
(22) Anmeldetag: 05.05.2011
(51) Int. Cl.: B60K 6/48, B60K 6/547, F16H 3/091, F16H 3/12, B60K 6/442, F16H 3/00

(54) **HYBRIDANTRIEB MIT EINEM AUTOMATISIERTEN SCHALTGETRIEBE**
HYBRID DRIVE HAVING AN AUTOMATIC GEARBOX
ENTRAINEMENT HYBRIDE DOTE D'UNE BOITE DE VITESSES AUTOMATIQUE

(30) Priorität: 28.06.2010 DE 102010030573
(43) Veröffentlichungstag der Anmeldung: 14.09.2016
(62) Teilanmeldung aus: 15163365.8
(73) Patentinhaber: ZF Friedrichshafen AG, 88046 Friedrichshafen (DE)
(72) Erfinder: Kaltenbach, Johannes, 88048 Friedrichshafen (DE)
(74) Vertreter: ZF Friedrichshafen AG

(56) Entgegenhaltungen:
- WO-A2-2009/147501
- DE-A1- 10 136 725
- US-A1- 2010 120 580

## Beschreibung

Die Erfindung betrifft einen Hybridantrieb mit einem automatisierten Schaltgetriebe gemäß dem Oberbegriff des Patentanspruchs 1.

Fahrzeuge werden zunehmend mit Hybridantrieben, d.h. mit zwei oder mehr verschiedenen Antriebsquellen ausgestattet. Solche Antriebe können insbesondere im Straßenverkehr zur Verminderung des Kraftstoffverbrauchs und der Schadstoffemissionen beitragen. Ziel der Entwicklung sind Hybrid-Antriebsstränge, die möglichst kompakt bauend, bei möglichst geringer Kompliziertheit und bei geringem Kosten- und Konstruktionsaufwand in Fahrzeuge implementiert werden können. Dabei haben sich weitgehend Antriebsstränge mit einem Verbrennungsmotor und einem oder mehreren Elektromotoren als Parallelhybrid oder als Mischhybrid durchgesetzt, da sie durch eine im Kraftfluss im Wesentlichen parallele Anordnung des Verbrennungsmotors und des Elektroantriebs sowohl eine Überlagerung der Antriebsmomente als auch eine Ansteuerung mit rein verbrennungsmotorischem Antrieb oder rein elektromotorischem Antrieb ermöglichen. Da sich die Antriebsmomente des Elektroantriebs und des Verbrennungsmotors je nach Ansteuerung addieren können, ist eine vergleichsweise kleinere Auslegung des Verbrennungsmotors und/oder dessen zeitweise Abschaltung möglich, wodurch eine signifikante Reduzierung der CO₂-Emissionen ohne nennenswerte Leistungs- bzw. Komforteinbußen erreicht werden kann. Die Möglichkeiten und Vorteile eines Elektroantriebes können somit mit den Reichweiten-, Leistungs- und Kostenvorteilen von Brennkraftmaschinen verbunden werden.

Als weitere Hybridantriebe sind Serienhybride zu erwähnen, bei denen ein Verbrennungsmotor als Antrieb für einen Generator dient, welcher eine elektromotorische Maschine speist, so dass der Verbrennungsmotor von den Antriebsrädern entkoppelt ist und daher ständig in einem einzigen, emissionsgünstigen Betriebspunkt betrieben werden kann. Hierbei ist jedoch der Wirkungsgrad des Antriebs aufgrund der mechanisch-elektrischen Mehrfachumwandlung verringert und die vielfältigen Steuerungsmöglichkeiten eines Parallelhybrides oder einer Mischform sind nicht gegeben.

Um einen möglichst effektiven Betrieb des Hybridantriebs zu erreichen, werden Antriebsstrategien eingesetzt, die den Elektroantrieb situationsbedingt flexibel einsetzen, beispielsweise zum Anfahren, als alleinige Antriebsquelle im städtischen Kurzstreckenverkehr oder in einem Stop-and-Go-Betrieb, als zusätzliche Antriebsquelle bei erhöhten Leistungsanforderungen in einem Boostbetrieb, als Startergenerator zum schnellen Starten des Verbrennungsmotors sowie als Generator zur Stromerzeugung oder zur Energierückgewinnung in einem Rekuperationsbetrieb. Der Verbrennungsmotor soll hingegen zumindest überwiegend in verbrauchs-, drehmoment- und drehzahlgünstigen Betriebspunkten bei hohem Wirkungsgrad betrieben werden.

Grundsätzlich können Hybridantriebe mit allen gängigen Formen von Fahrzeuggetrieben zur Bildung von Antriebsübersetzungen kombiniert werden. Als besonders vorteilhaft haben sich hinsichtlich des Wirkungsgrades, der Wirtschaftlichkeit und des Fahrkomforts parallele Hybridanordnungen mit einem Verbrennungsmotor und einem Elektroantrieb in Verbindung mit einem automatisierten Schaltgetriebe, kurz als AMT-Hybrid bezeichnet, erwiesen.

Der Elektroantrieb in einem solchen Antriebsstrang kann auf verschiedene Weise in den Kraftfluss integriert werden. In einer gängigen Bauweise ist eine Elektromaschine am Getriebeeingang angeordnet. Dabei wird zwischen einer Ein-Kupplungsanordnung (1K) und einer Zwei-Kupplungsanordnung (2K), oder sofern eine integrierte Startergenerator-Funktion (ISG) der Elektromaschine vorgesehen ist, zwischen einer 1K-ISG-Anordnung und einer 2K-ISG-Anordnung unterschieden.

Bei einer 2K-ISG-Anordnung ist beispielsweise die Elektromaschine direkt auf einer Getriebeeingangswelle angeordnet, welche über eine erste Kupplung, die als eine reibschlüssige oder gegebenenfalls als eine formschlüssige Trennkupplung ausgebildet sein kann, mit dem Verbrennungsmotor verbindbar ist. Die Elektromaschine ist über eine separate zweite Kupplung mit einem Schaltgetriebe koppelbar. Zwischen der zweiten Kupplung und dem Getriebe kann auch eine zusätzliche zweite elektrische Maschine angeordnet sein. Bei einer 1K-ISG-Anordnung ist lediglich eine Kupplung zwischen einem Verbrennungsmotor und einer Elektromaschine vorgesehen. Eine zweite separate Kupplung entfällt oder deren Funktion wird gegebenenfalls von einer getriebeinternen Schaltkupplung übernommen.

Anstelle einer direkten Anordnung zwischen dem Verbrennungsmotor und dem Fahrzeuggetriebe kann die Elektromaschine auch über eine Getriebestufe oder ein Planetengetriebe mit dem Getriebeeingang antriebsverbunden sein. Dadurch kann die Elektromaschine insbesondere als ein elektrodynamisches Anfahrelement (EDA) eingesetzt werden, wodurch eine herkömmliche Anfahrkupplung entfallen kann. Bei anderen Antriebssträngen ist der Elektroantrieb hingegen am Getriebeabtrieb oder bei Achshybriden direkt an einer Fahrzeugachse angeordnet. 1K-ISG und 2K-ISG-Hybridkonzepte mit getriebeeingangsseitigen oder getriebeausgangsseitigen elektrischen Maschinen und Achshybride haben sich bereits in der Praxis bewährt.

Allerdings haben Hybridantriebe, bei denen der Elektroantrieb am Getriebeeingang oder am Getriebeabtrieb permanent antriebsverbunden, d.h. in den Kraftfluss des Antriebsstrangs integriert ist, den Nachteil, dass unnötige Nulllastverluste über die Elektromaschine entstehen können. Zudem sind die Ansteuerungsmöglichkeiten, je nach Anordnung des Elektroantriebs und Antriebsstrangkonfiguration unterschiedlich und begrenzt. Insbesondere erlauben Hybridkonzepte mit einem Elektroantrieb, der mit einem Getriebeeingang einer konventionellen Getriebestruktur antriebsverbunden ist, keine Zugkraftunterstützung während der Schaltung von verbrennungsmotorisch angetriebenen Gängen.

Bei Hybridkonzepten mit einem Elektroantrieb, der mit einem Getriebeabtrieb oder einem direkten Achsantrieb antriebsverbunden ist, ist hingegen der Start des Verbrennungsmotors und das Betreiben der Elektromaschine im Fahrzeugstillstand sowie die Nutzung verschiedener Getriebeübersetzungen durch den Elektroantrieb nicht möglich.

Demgegenüber werden Hybridanordnungen angestrebt, bei denen ein Elektroantrieb zumindest für einzelne Übersetzungsstufen vollständig vom Kraftfluss abgekoppelt bzw. wahlweise angekoppelt werden kann. Diese Hybridanordnungen haben grundsätzlich das Potenzial für eine größere Variabilität bei der Konzeption eines Radsatzes insbesondere für einen AMT-Hybrid, da konstruktive Einschränkungen aufgrund einer mechanischen Verbindung zwischen Verbrennungsmotor und Elektroantrieb zumindest vermindert werden können.

Ein derartiges Getriebekonzept hat beispielsweise bei so genannten Plug-in Hybrid-Fahrzeugen oder bei so genannten mechanisch erweiterten Rangeextender-Elektrofahrzeugen, das sind Fahrzeuge, bei denen der Elektroantrieb so ausgelegt ist, dass er zumindest für einen Kurzstreckenbetrieb, beispielsweise im Stadtverkehr, alleine genügend Fahrleistung zur Verfügung stellt, verschiedene Vorteile.

Zum einen ist bei verbrennungsmotorischen Schaltvorgängen, d.h. bei Gangwechseln, während welcher der Verbrennungsmotor die Antriebsquelle des Fahrzeuges ist, eine weitgehende Zugkrafterhaltung mit Hilfe des Elektroantriebs möglich. Umgekehrt kann die Zugkraft bei einem Gangwechsel des Elektroantriebs mit Hilfe des Verbrennungsmotors aufrechterhalten werden, sofern der Verbrennungsmotor aktuell nicht abgeschaltet ist. Zum anderen sind die Schaltpunkte bei elektrischen Schaltungen aufgrund des im Vergleich zum Verbrennungsmotor meist zur Verfügung stehenden größeren Drehzahlbandes bei gutem Wirkungsgrad grundsätzlich sehr variabel wählbar. Die erzielbaren Schaltzeiten erlauben zudem die Verwendung einer relativ kostengünstigen Schaltaktuatorik.

Die Schaltvorgänge können durch den Verbrennungsmotor über eine gegebenenfalls zwischen dem Verbrennungsmotor und dem Getriebeeingang wirksamen Reibungskupplung synchronisiert werden, so dass zumindest teilweise Synchronisierungen durch kostengünstigere Klauenkupplungen ersetzt werden können. Andererseits kann eine gegebenenfalls vorhandene Anfahrkupplung geschont werden, indem die Elektromaschine als Anfahrelement dient. Da eine Elektromaschine grundsätzlich in beiden Drehrichtungen angesteuert werden kann, ist durch eine Drehrichtungsumkehr ein Verzicht auf einen separaten Rückwärtsgangradsatz möglich. Zudem können die Stufensprünge der verbrennungsmotorischen Gänge in einem solchen Hybridsystem vergleichsweise groß gewählt werden, wodurch für die Realisierung einer vorgegebenen Gesamtspreizung eine relativ geringe Anzahl von Gängen genügt. Dadurch können Kosten, Bauraum und Gewicht eingespart werden.

Die WO 2008/138387 A1 zeigt einen solchen AMT-Hybrid mit verbrennungsmotorisch angetriebenen Gängen und mit elektromotorisch angetriebenen Gängen. Zugkraftunterbrechungsfreie Schaltvorgänge sowie eine Funktionsvielfalt des Elektroantriebs werden bei dem bekannten Hybridantriebssystem mit Hilfe zweier Teilgetriebe realisiert. Die Getriebestruktur umfasst im Wesentlichen in achsparalleler Anordnung zwei Teilantriebsstränge mit jeweils einer Antriebswelle sowie einen dazwischen angeordneten Abtriebsstrang mit einer Abtriebswelle, wobei in mehreren Radsatzebenen auf den Wellen je Ebene zwei Losräder, denen jeweils eine Gangkupplung zugeordnet ist, und ein Festrad angeordnet sind.

Die Teilantriebsstränge bilden zusammen mit dem Abtriebsstrang jeweils ein Teilgetriebe mit Gangschaltzahnradpaaren, wobei das jeweilige auf der Abtriebswelle angeordnete Zahnrad zum einen mit einem Zahnrad auf der ersten Antriebswelle und zum anderen mit einem Zahnrad auf der zweiten Antriebswelle kämmt, also wahlweise, je nach geschalteter Gangkupplung, an einer Übersetzung des ersten Teilgetriebes oder des zweiten Teilgetriebes partizipiert.

Das erste Teilgetriebe ist über eine Reibungskupplung mit einem Verbrennungsmotor verbindbar, das zweite Teilgetriebe ist mit einer Elektromaschine permanent antriebsverbunden. Ein Wechsel der Kopplung zwischen der ersten und der zweiten Antriebswelle mit der Abtriebswelle erfolgt durch Schalten von Gangschaltzahnradpaaren, wobei einige der Gänge durch Schalten eines einzelnen Zahnradpaares im Kraftfluss von einer der Antriebswellen auf die Abtriebswelle und andere Gänge durch Hintereinanderschalten zweier oder mehr Zahnradpaare im Wechsel von der einen Antriebswelle über die andere Antriebswelle auf die Abtriebswelle darstellbar sind.

Die US 2010/120580 A1 gibt ein Hybridgetriebe für ein Fahrzeug an, wobei das Getriebe eine Eingangs- und eine zu dieser koaxiale Ausgangswelle sowie eine erste und eine zweite Vorgelegewelle, die parallel zu der Eingangswelle sind, aufweist. Ein erster und ein zweiter Radsatz verbinden die Eingangswelle und die erste Vorgelegewelle, ein dritter und ein vierter Radsatz verbinden die erste Vorgelegewelle mit der Ausgangswelle, ein fünfter und sechster Radsatz verbinden die zweite Vorgelegewelle mit der Ausgangswelle. Jeder Radsatz weist eine Eingangs- und ein Ausgangsrad auf, die miteinander kämmen. Eine Drehmomentübertragung erfolgt von dem Eingangsrad auf das Ausgangsrad. Das Getriebe weist zudem fünf Synchron-Schaltelemente auf. Eine erste und eine zweite elektrische Maschine sind benachbart zueinander in dem Getriebegehäuse angeordnet.

Die erste elektrische Maschine weist einen Rotor auf, der mit der Eingangswelle verbunden und mit dem ersten Radsatz über dessen Eingangsrad mittels einer untergeordneten Welle gekoppelt ist. Die zweite elektrische Maschine weist ebenfalls einen Rotor auf, der mit der Eingangswelle verbunden und mittels eines siebten und eines achten Radsatzes mit jeder der Vorgelegewellen verbunden ist. Das Getriebe kann wenigstens fünf verschiedene Gänge darstellen, die entweder rein elektrisch oder rein mechanisch oder in seriellem Hybrid betrieb oder in parallelem Hybridbetrieb dargestellt werden können.

Außerdem offenbart die DE 101 33 695 A1 einen AMT-Hybrid mit zwei Eingangswellen und zwei eingangsseitigen Kupplungen, vorzugsweise in Doppelkupplungsbauweise. Die beiden Eingangswellen bilden mit darauf angeordneten Los- und Festrädern sowie zugeordneten Schaltvorrichtungen jeweils ein Teilgetriebe. Die beiden Teilgetriebe sind entweder achsparallel mit jeweils einer Ausgangswelle oder einem achsparallelen Abtrieb ausgebildet, oder sie sind ineinander verschachtelt angeordnet, wobei die beiden Eingangswellen in üblicher Doppelkupplungsbauweise koaxial zueinander und eine Ausgangswelle axial dahinter angeordnet ist. Eine Elektromaschine greift an einem der beiden Teilgetriebe an.

Diese Elektromaschine kann getriebeausgangsseitig, d.h. an dem einer Antriebseinheit, beispielsweise einem Verbrennungsmotor, gegenüberliegenden Ende einer Getriebeeingangswelle angeordnet sein, wobei die Getriebeeingangswelle über die zugehörige eingangsseitige Kupplung mit einer Antriebswelle der Antriebseinheit wirkverbindbar ist. Insbesondere kann die Elektromaschine drehbar auf einer Getriebeausgangswelle angeordnet sein und mit einer der Getriebeeingangswellen über eine Zahnradstufe wirkverbunden sein. Die Elektromaschine kann alternativ dazu auch achsparallel zu einer der Getriebeeingangswellen angeordnet und über einen Zugmitteltrieb oder eine Zahnradstufe mit einer der Getriebeeingangswelle wirkverbunden sein.

Des Weiteren sind in der DE 199 60 621 B4 verschiedene Ausführungsformen eines Hybridantriebs beschrieben, bei dem zwei achsparallel oder koaxial zueinander angeordnete Vorgelegewellen jeweils über mehrere schaltbare Gangradsätze mit unterschiedlicher Übersetzung selektiv mit einer gemeinsamen Ausgangswelle in Triebverbindung bringbar sind. Die erste Vorgelegewelle steht über eine erste Eingangskonstante mit einer Eingangswelle in Triebverbindung, die über eine steuerbare Reibungskupplung mit der Triebwelle eines Verbrennungsmotors verbindbar ist. Die zweite Vorgelegewelle ist entweder unmittelbar drehfest mit dem Rotor einer Elektromaschine verbunden oder steht über eine zweite Eingangskonstante mit dem Rotor der Elektromaschine in Triebverbindung. Zudem ist jeweils eine ein- und ausrückbare Schaltkupplung vorgesehen, über welche die zweite Vorgelegewelle über die zweite Eingangskonstante mit der Eingangswelle in Triebverbindung bringbar oder der Rotor der Elektromaschine mit der Eingangswelle koppelbar ist. Bei eingerückter Schaltkupplung stehen somit auch die beiden Vorgelegewellen über die beiden Eingangskonstanten miteinander in Triebverbindung.

Die DE 101 36 725 A1 und die WO2010/070707 A1 zeigen jeweils Hybridantriebe mit zwei koaxial zueinander angeordneten Getriebeeingangswellen, von denen jeweils eine mit einem Verbrennungsmotor und die andere mit einer Elektromaschine verbunden ist. Zwischen den koaxialen Getriebeeingangswellen und einer Getriebeausgangswelle sind jeweils mehrere Radsatzebenen angeordnet.

Die bekannten Hybridantriebe besitzen zwar einen oder mehrere der eingangs genannten Vorteile der Antriebskonfigurationen mit einem abkoppelbaren Elektroantrieb, die Variationsmöglichkeiten der darin gezeigten Teilgetriebe bei der Konzeption eines Radsatzes sind jedoch eher begrenzt oder zumindest sind die Getriebestrukturen in Teilen relativ konstruktions- und kostenaufwendig oder nicht ohne weiteres an eine gewünschte Gesamtspreizung und Gangzahl anpassbar.

Vor diesem Hintergrund liegt der Erfindung die Aufgabe zugrunde, ein Hybridantrieb mit einem automatisierten Schaltgetriebe vorzuschlagen, der die eingangs genannten Vorteile besitzt bzw. Nachteile vermeidet. Dieser Antrieb soll vor allem eine große Variabilität hinsichtlich eines Radsatzkonzeptes sowie der Verteilung elektrischer sowie verbrennungsmotorischer Gänge aufweisen und dennoch im Konstruktions- und Kostenaufwand günstig sowie im Betrieb effizient und komfortabel sein.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass zur Bildung eines Hybridantriebsstranges mit einem automatisierten Schaltgetriebe eine Elektromaschine schaltbar an einem Getriebeeingang angeordnet werden kann, so dass ein nachgeordneter Radsatz des Getriebes, abgesehen von einer Ankoppeleinrichtung, weitgehend frei konzipierbar und die Elektromaschine multifunktional ansteuerbar ist. Hierbei ist es von Bedeutung, wenn mit einer Getriebeschaltvorrichtungen zwei Getriebeeingangswellen drehfest miteinander koppelbar sind, dass eine von denen von einem Verbrennungsmotor und die andere von der Elektromaschine antreibbar ist. Die gleiche Getriebeschaltvorrichtung dient in einer anderen Schaltstellung vorteilhaft dem Schalten eines Getriebeganges.

Demnach geht die Erfindung aus von einen Hybridantrieb mit einem automatisierten Schaltgetriebe, beispielsweise für ein Kraftfahrzeug, mit einem Verbrennungsmotor, der mit wenigstens einer ersten Getriebeeingangswelle triebverbunden ist, mit einem Elektroantrieb, der wenigstens eine Elektromaschine aufweist, die mit einer zweiten Getriebeeingangswelle triebverbunden ist, mit in insgesamt drei Radsatzebenen angeordneten Losrädern und Festrädern, mit mehreren Gangschaltvorrichtungen, und mit einer Getriebeausgangswelle. Die beiden Getriebeeingangswellen sind koaxial zueinander angeordnet, und eine Gangschaltvorrichtung verbindet in einer ihrer Schaltstellungen die beiden Getriebeeingangswellen antriebswirksam miteinander, und schaltet in einer anderen Schaltstellung einen Gang. Zur Lösung der gestellten Aufgabe sieht die Erfindung nun einen Hybridantriebstrang vor, wobei
die zweite Getriebeeingangswelle als Hohlwelle ausgebildet ist, welche die erste Getriebeeingangswelle zumindest abschnittweise koaxial umgibt und mit der ersten Getriebeeingangswelle mittels der Gangschaltvorrichtung koppelbar ist,
auf der der als Hohlwelle ausgebildeten zweiten Getriebeeingangswelle jeweils ein Festrad oder ein Losrad einer ersten Radsatzebenen und einer zweiten Radsatzebene der drei Radsatzebenen angeordnet ist,
die Getriebeausgangswelle einen zu den Getriebeeingangswellen achsversetzten Getriebeabtrieb bildet, und insgesamt drei Vorwärtsgänge geschaltet werden können.

Durch diese Anordnung wird mit relativ geringem Kosten- und Konstruktionsaufwand eine hohe Variabilität bei der Konzeptionierung eines AMT-Hybridantriebs hinsichtlich eines vorgesehenen Einsatzbereiches eines damit ausgestatteten Fahrzeuges ermöglicht, wobei wahlweise verbrennungsmotorische, elektrische und verbrennungsmotorisch-elektrisch gekoppelte Antriebsmomentübertragungen zur Verfügung stehen.

In Weiterbildung dieses Hybridantriebs kann vorgesehen sein, dass die Gangschaltvorrichtung, mit welcher die beiden Getriebeeingangswellen antriebswirksam koppelbar sind, in ihrer anderen Schaltstellung den zweiten Getriebegang schaltet. Es ist aber auch möglich, dass in der Schaltstellung ein anderer Getriebegang geschaltet wird.

Als weiteres Merkmal eines solchen Hybridantriebs kann vorgesehen sein, dass auf der zweiten Getriebeeingangswelle oder der Getriebeausgangswelle eine zweite Schaltvorrichtung angeordnet ist, mit welcher in einer ersten Schaltstellung der erste Getriebegang und in einer zweiten Schaltstellung der dritte Getriebegang schaltbar ist.

Gemäß einer Abwandlung des eingangs genannten Hybridantriebs ist vorgesehen, dass an der ersten Getriebeeingangswelle zwischen dem Verbrennungsmotor und der ersten Gangschaltvorrichtung eine zweite Elektromaschine angeordnet ist. Sie kann beispielsweise zur Synchronisation von Wellendrehzahlen dienen, sofern im Getriebe Kosten sparend einfache Klauenkupplungen als Getriebeschaltvorrichtungen verwendet werden.

Der Getriebeabtrieb ist durch die Getriebeausgangswelle gebildet, wodurch eine ausgangsseitige Abtriebskonstante entfallen kann.

Insbesondere kann der Radsatz grundsätzlich für eine Hybridantrieb-Struktur mit achsversetztem Abtrieb als aufgrund der wegfallenden Abtriebskonstante axial kürzer bauende Variante vorzugsweise für den Front-Quereinbau eingesetzt werden.

Die Gangfolge ist je nach vorgegebener Gesamtspreizung und gewünschter Drehmomentcharakteristik flexibel gestaltbar.

Ein Rückwärtsgang kann über eine Drehrichtungsumkehr des Elektroantriebs realisiert werden, wodurch eine besonders kurze axiale Baulänge erreicht wird.

Je nach den vorgegebenen Einbauraumverhältnissen können der Verbrennungsmotor und der Elektroantrieb auf der gleichen Getriebeseite oder gegenüberliegend angeordnet sein. Weiterhin ist bei der achsversetzten Variante die Positionierung des zu einem Differenzialgetriebe hinführenden Abtriebs auf beiden Getriebeseiten möglich.

Ein weiterer Vorteil besteht darin, dass die Losräder und die zugehörigen erforderlichen bzw. vorgesehenen Gangschaltvorrichtungen mit einer grundsätzlich gleich bleibenden Schaltlogik weitgehend frei auf die Antriebsebene und die Vorgelegewellen-Ebene aufteilbar sind. Besonders vorteilhaft ist es beispielsweise, auf der ersten Getriebeeingangswelle nur Losräder und keine Festräder anzuordnen, so dass über zugehörige, als Synchronisierungen ausgebildete Gangschaltvorrichtungen nur relativ geringe Trägheitsmassen zu synchronisieren sind, was sich energiesparend auswirkt. Gegebenenfalls vorhandene, als unsynchronisierte Klauenkupplungen ausgebildete Gangschaltvorrichtungen können mittels der Elektromaschine synchronisiert werden.

Die Aufteilung der Gänge auf die Zahnradpaare bzw. Radsatzebenen und eine zugehörige Antriebsverbindung ist grundsätzlich frei wählbar. Insbesondere ist die Wahl der elektrisch zu fahrenden Gänge weitgehend frei. Um die Zugkraft beim Gangwechsel aufrechterhalten zu können, ist es allerdings sinnvoll, gekoppelte Gänge, bei denen die Elektromaschine und der Verbrennungsmotor über das gleiche Zahnradpaar bzw. die gleiche Radsatzebene zum Abtrieb wirken, in der Gangfolge nicht aufeinander folgen zu lassen, sondern zwischen zwei Gängen einen ungekoppelten, d.h. einen verbrennungsmotorisch oder elektrisch anzutreibenden Gang zu positionieren. Ohnehin scheint es vorteilhafter, bei der Stufung des Getriebes zwischen zwei elektrisch anzutreibenden Gängen einen vergleichsweise großen Gangsprung vorzusehen.

Bei einem Plug-In-Hybrid kann die Elektromaschine vorteilhaft als ein Anfahrelement für alle Anfahrvorgänge fungieren. Dadurch ist es möglich, zwischen dem Verbrennungsmotor und der ersten Getriebeeingangswelle eine kostengünstige Trennkupplung anzuordnen. Es kann jedoch auch eine Reibungskupplung vorgesehen sein, wodurch ein Stop-and-Go-Betrieb über eine Schlupfansteuerung der Reibungskupplung und den Verbrennungsmotor möglich ist. Ein Rückwärtsgang ist vorzugsweise elektrisch realisiert, wodurch eine Radsatzebene eingespart und die axiale Baulänge verkürzt ist.

Der Verbrennungsmotor kann während der Fahrt über die Elektromaschine direkt gestartet werden, wodurch allerdings die Zugkraft kurzfristig unterbrochen wird. Grundsätzlich kann daher auch ein zusätzlicher Startergenerator angeordnet sein, wodurch ein Schleppstart des Verbrennungsmotors aus dem elektrischen Fahrbetrieb möglich ist.

Bei der mittels der nur drei Radsatzebenen für Vorwärtsgänge realsierten besonders einfachen, kostengünstigen und Bauraum sparenden Getriebestruktur können die drei Radsatzebenen für Vorwärtsgänge mittels zweier unsynchronisierter Schaltelemente, beispielsweise Klauenkupplungen, geschaltet werden. Ein Rückwärtsgang bzw. Rückwärtsfahrbetrieb ist elektrisch realisierbar. Der Verbrennungsmotor ist unmittelbar, d.h. nicht schaltbar, mit der ersten Getriebeeingangswelle verbunden. Eine Anfahr- oder Trennkupplung kann gänzlich entfallen, da die Elektromaschine als alleiniges Anfahrelement ausreicht. Bei dieser so genannten 0K-ISG - Anordnung dient der Verbrennungsmotor lediglich als reiner mechanischer Rangeextender sowie als Synchronisationsmittel der Gänge über eine Drehzahlregulierung.

Außerdem kann vorgesehen sein, dass der Elektroantrieb um eine zweite elektrische Maschine erweitert ist. Diese Elektromaschine kann auf der ersten Getriebeeingangswelle mit dem Verbrennungsmotor in Serie geschaltet sein und vorteilhaft als Generator zur Speisung eines Bordnetzes bzw. zum Laden eines elektrischen Energiespeichers oder/und zum Starten des Verbrennungsmotors angesteuert werden.

Die zweite Elektromaschine ist insbesondere vorteilhaft so ausgelegt, dass sie permanent die erforderliche mittlere elektrische Leistung zur Versorgung der ersten Elektromaschine bei einem länger anhaltenden elektrischen Stop-and-Go-Betrieb generieren kann, so dass ein temporärer Serienhybridmodus ansteuerbar ist. Auch bei dieser Anordnung kann eine Anfahrkupplung entfallen, wodurch Bauraum und Kosten eingespart werden.

Konkrete Antriebsstrangstrukturen, die das Grundprinzip der Erfindung nutzen, können beispielsweise wie folgt aussehen:
Ein weiteres Beispiel ist ein Hybridantrieb, bei welchem die erste Getriebeeingangswelle direkt mit dem Verbrennungsmotor verbunden ist, dass drei Radsatzebenen für Vorwärtsgänge sowie ein Rückwärtsgang über eine elektromotorische Drehrichtungsumkehr eines Vorwärtsgangradsatzes vorgesehen sind, wobei zwei Radsatzebenen der zweiten Getriebeeingangswelle und eine Radsatzebene der ersten Getriebeeingangswelle zugeordnet sind, wobei auf der Getriebeeingangswelle und auf der Vorgelegewelle oder der zweiten Getriebeeingangswelle jeweils eine als eine Klauenkupplung ausgebildete Gangschaltvorrichtung angeordnet sind, und dass die Getriebeausgangswelle achsparallel zu der ersten Getriebeeingangswelle angeordnet ist, wobei die Vorgelegewelle auch als Getriebeausgangswelle dient.

Ein weiteres Beispiel ist ein Hybridantrieb, bei welchem die erste Getriebeeingangswelle direkt mit dem Verbrennungsmotor verbunden ist, dass auf der ersten Getriebeeingangswelle auf der dem Verbrennungsmotor zugewandten Getriebeseite zusätzlich eine zweite Elektromaschine angeordnet ist, dass drei Radsatzebenen für Vorwärtsgänge sowie ein Rückwärtsgang über eine elektromotorische Drehrichtungsumkehr eines Vorwärtsgangradsatzes vorgesehen sind, wobei zwei Radsatzebenen der zweiten Getriebeeingangswelle und eine Radsatzebene der ersten Getriebeeingangswelle zugeordnet sind, wobei auf der ersten Getriebeeingangswelle und auf der Vorgelegewelle oder der zweiten Getriebeeingangswelle jeweils eine als eine Klauenkupplung ausgebildete Gangschaltvorrichtung angeordnet sind, und dass die Getriebeausgangswelle achsparallel zu der ersten Getriebeeingangswelle angeordnet ist, wobei die Vorgelegewelle auch als Getriebeausgangswelle dient.

Ein weiteres Beispiel ist ein Hybridantrieb, bei welchem die erste Getriebeeingangswelle direkt mit dem Verbrennungsmotor verbunden ist, dass auf der ersten Getriebeeingangswelle auf der dem Verbrennungsmotor diametral gegenüberliegenden Getriebeseite zusätzlich eine zweite Elektromaschine angeordnet ist, dass drei Radsatzebenen für Vorwärtsgänge sowie ein Rückwärtsgang über eine elektromotorische Drehrichtungsumkehr eines Vorwärtsgangradsatzes vorgesehen sind, wobei zwei Radsatzebenen der zweiten Getriebeeingangswelle und eine Radsatzebene der ersten Getriebeeingangswelle zugeordnet sind, wobei auf der ersten Getriebeeingangswelle und auf der Vorgelegewelle oder der zweiten Getriebeeingangswelle jeweils eine als eine Klauenkupplung ausgebildete Gangschaltvorrichtung angeordnet sind, und dass die Getriebeausgangswelle achsparallel zu der ersten Getriebeeingangswelle angeordnet ist, wobei die Vorgelegewelle auch als Getriebeausgangswelle dient.

Ein weiteres Beispiel ist ein Hybridantrieb, bei welchem die erste Getriebeeingangswelle direkt mit dem Verbrennungsmotor verbunden ist, dass auf der ersten Getriebeeingangswelle auf der dem Verbrennungsmotor zugewandten Getriebeseite zusätzlich eine zweite Elektromaschine angeordnet ist, dass die erste Elektromaschine und der Verbrennungsmotor diametral gegenüberliegend angeordnet sind, dass drei Radsatzebenen für Vorwärtsgänge sowie ein Rückwärtsgang über eine elektromotorische Drehrichtungsumkehr eines Vorwärtsgangradsatzes vorgesehen sind, wobei zwei Radsatzebenen der zweiten Getriebeeingangswelle und eine Radsatzebene der ersten Getriebeeingangswelle zugeordnet sind, wobei auf der ersten Getriebeeingangswelle und auf der Vorgelegewelle oder der zweiten Getriebeeingangswelle jeweils eine als eine Klauenkupplung ausgebildete Gangschaltvorrichtung angeordnet sind, und dass die Getriebeausgangswelle achsparallel zu der ersten Getriebeeingangswelle angeordnet ist, wobei die Vorgelegewelle auch als Getriebeausgangswelle dient.

Die genannten Ausführungsformen stellen lediglich Beispiele für die Erfindung dar. Der Fachmann wird durch sinnvolle Kombinationen der offenbarten Merkmale weitere AMT-Hybride finden können, die das Grundprinzip nutzen.

Zur weiteren Verdeutlichung der Erfindung sind der Beschreibung Zeichnungen mit mehreren exemplarischen Ausführungsbeispielen zur besseren Erläuterung beigefügt. In diesen zeigen:
- Fig. 1: eine beispielhafte Hybridantrieb-Struktur mit automatisiertem Schaltgetriebe, mit einem Verbrennungsmotor und einer ersten elektrischen Maschine, mit koaxialem An- und Abtrieb, mit sechs Vorwärtsgängen und einem Rückwärtsgang, und mit auf einer Antriebs- und Abtriebsebene sowie auf einer Vorgelegewellen-Ebene ungleichmäßig verteilt angeordneten Gangschaltvorrichtungen,
- Fig. 2: eine Gangtabelle der beispielhaften Hybridantrieb-Struktur nach Fig. 1 mit einer Gangfolge sowie einer beispielhaften Übersetzungsreihe und Stufung,
- Fig. 3: eine weitere beispielhafte Hybridantrieb-Struktur mit automatisiertem Schaltgetriebe, mit ausschließlich auf einer Antriebs- und Abtriebsebene angeordneten Gangschaltvorrichtungen,
- Fig. 4: eine weitere beispielhafte Hybridantrieb-Struktur mit automatisiertem Schaltgetriebe, mit auf einer Antriebs- und Abtriebsebene sowie auf einer Vorgelegewellen-Ebene gleichmäßig verteilt angeordneten Gangschaltvorrichtungen,
- Fig. 5: eine weitere beispielhafte vierte Hybridantrieb-Struktur mit automatisiertem Schaltgetriebe, mit einem koaxialen Antrieb und Abtrieb mit fünf Vorwärtsgängen sowie ohne Rückwärtsgang,
- Fig. 6: eine weitere beispielhafte Hybridantrieb-Struktur mit automatisiertem Schaltgetriebe, mit einem achsversetzten Antrieb und Abtrieb mit fünf Vorwärtsgängen sowie ohne Rückwärtsgang,
- Fig. 7: eine beispielhafte schematische Darstellung einer Schalttopologie der Hybridantrieb-Struktur nach Fig. 6,
- Fig. 8: eine weitere beispielhafte Gangtabelle der Hybridantrieb-Struktur nach Fig. 6 und Fig. 7 mit einer Gangfolge,
- Fig. 9: eine weitere beispielhafte Hybridantrieb-Struktur mit automatisiertem Schaltgetriebe, mit gegenüberliegend angeordneten Verbrennungsmotor und Elektromaschine,
- Fig. 10: eine weitere beispielhafte Hybridantrieb-Struktur mit automatisiertem Schaltgetriebe, mit einer gegenüber der Hybridantrieb-Struktur von Fig. 6 veränderten Gangfolge,
- Fig. 11: eine weitere beispielhafte Gangtabelle der Hybridantrieb-Struktur von Fig. 10 mit der Gangfolge,
- Fig. 12: eine erste erfindungsgemäße Hybridantrieb-Struktur mit automatisiertem Schaltgetriebe, mit achsversetztem Antrieb und Abtrieb mit drei Vorwärtsgängen sowie ohne Rückwärtsgang und ohne Anfahrkupplung,
- Fig. 13: eine Gangtabelle der Hybridantrieb-Struktur gemäß Fig. 12 mit einer Gangfolge,
- Fig. 14: eine zweite erfindungsgemäße Hybridantrieb-Struktur mit automatisiertem Schaltgetriebe, mit einer mit einem Verbrennungsmotor in Serie geschalteten, hintereinander angeordneten zweiten elektrischen Maschine,
- Fig. 15: eine Gangtabelle der Hybridantrieb-Struktur nach Fig. 14 mit einer Gangfolge,
- Fig. 16: eine dritte erfindungsgemäße Hybridantrieb-Struktur mit automatisiertem Schaltgetriebe, mit einer dem Verbrennungsmotor gegenüberliegend angeordneten zweiten elektrischen Maschine,
- Fig. 17: eine vierte erfindungsgemäßeHybridantrieb-Struktur mit automatisiertem Schaltgetriebe, mit einer gegenüber einer ersten elektrischen Maschine angeordneten zweiten elektrischen Maschine, und
- Fig. 18: eine Hybridantrieb-Struktur mit automatisiertem Schaltgetriebe, bei dem die beiden Getriebeeingangswellen koaxial sowie axial hintereinander angeordnet sind.

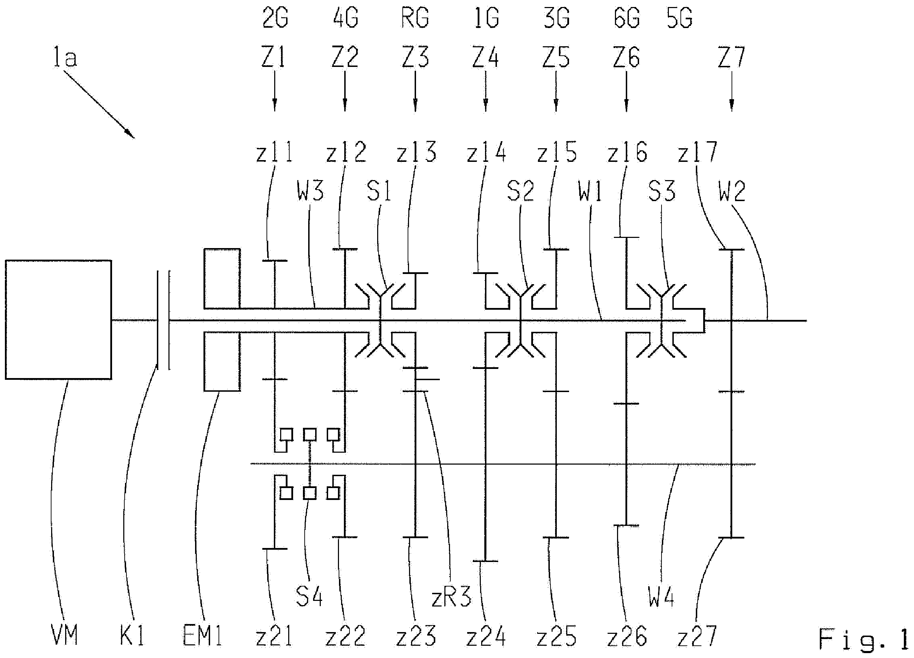

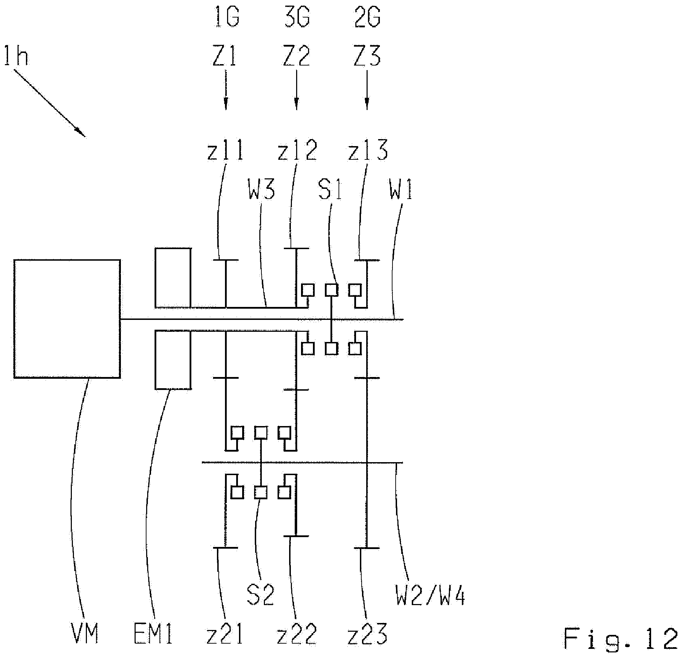

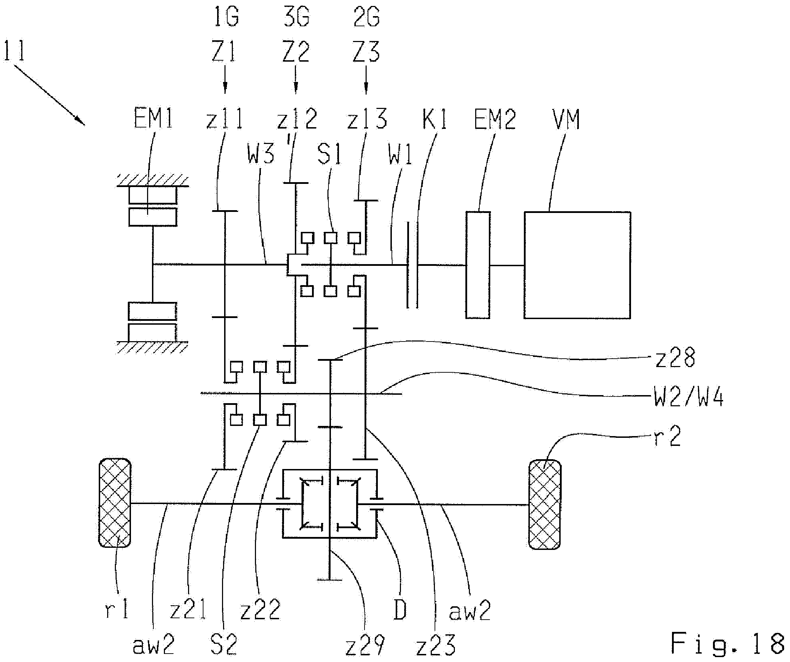

Die Figuren 1, 3, 4, 5, 6, 9, 10, 12, 14, 16, 17 und 18 zeigen demnach zwölf Hybridantrieb-Strukturen 1a - 1l mit jeweils einem automatisierten Schaltgetriebe (AMT-Hybrid), bei denen die beiden Getriebeeingangswellen mittels einer Gangschaltvorrichtung antriebswirksam miteinander verbindbar sind, und bei denen mit der gleichen Gangschaltvorrichtung in einer zweiten Schaltstellung ein Getriebegang schaltbar ist. Bis auf die Ausführungsbeispiele gemäß den Figuren 12 bis sind die Ausführungsbeispiele nicht Teil dieser Erfindung und dienen lediglich der Erläuterung. Bei den Getrieben der Ausführungsbeispiele gemäß den Figuren 12 bis 17 ist eine der beiden Getriebeeingangswellen zumindest abschnittweise koaxial und radial über der anderen Eingangswelle angeordnet. Bei der Variante gemäß Fig. 18 sind die beiden Getriebeeingangswellen dagegen koaxial und axial benachbart zueinander angeordnet.

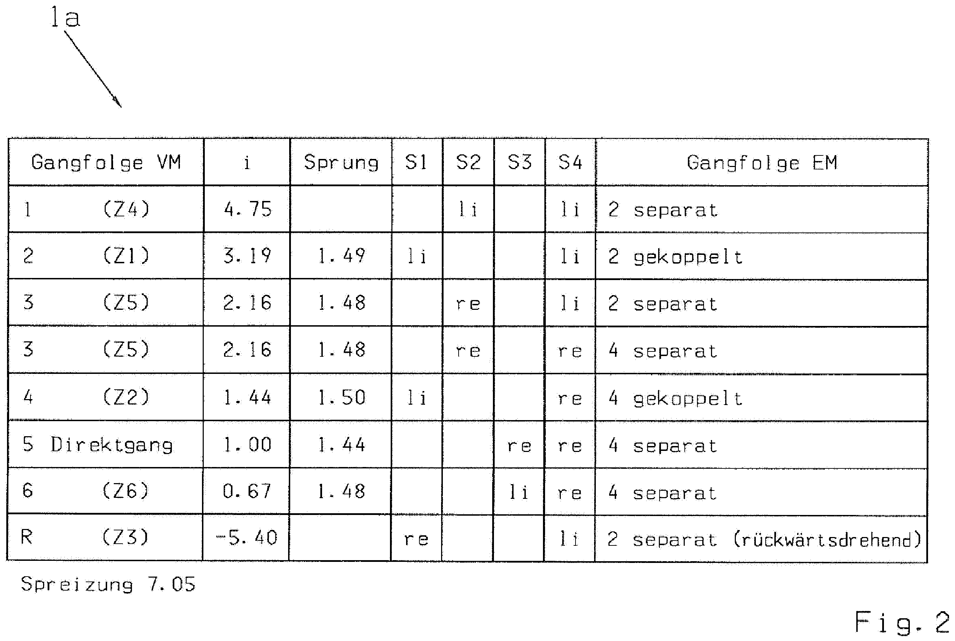

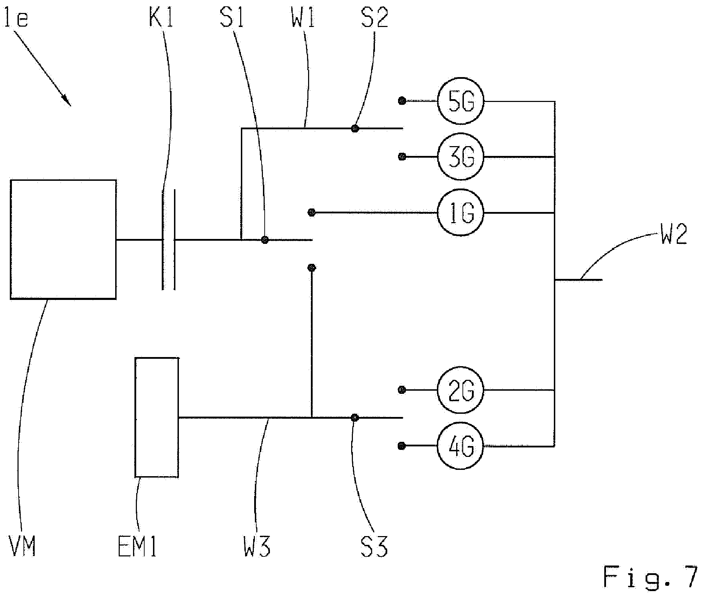

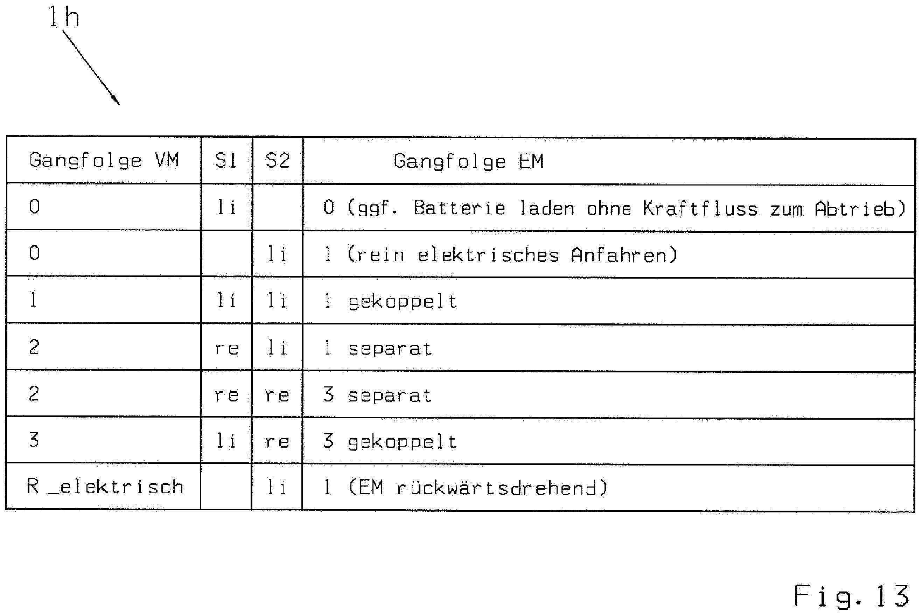

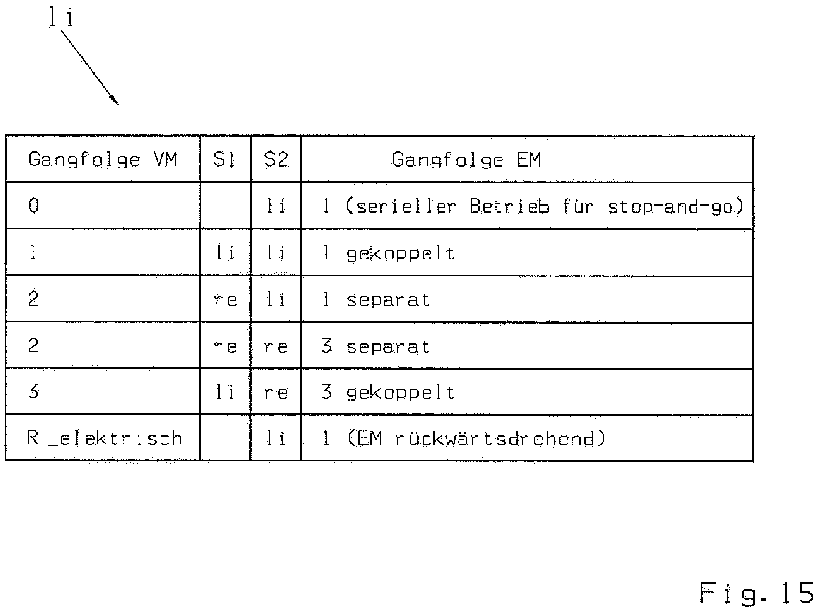

Die Figuren 2, 8, 11 zeigen zugehörige beispielhafte, die Figuren 13, 15 zeigen zugehörige Gangtabellen. Fig. 7 zeigt eine beispielhafte allen Hybridantrieb-Strukturen 1a - 1l zugrunde liegende Schaltopologie. Zur Vereinfachung sind in den Figuren für vergleichbare Bauteile gleiche Bezugszeichen verwendet.

Demnach umfasst eine in Fig. 1 gezeigte beispielhafte Hybridantrieb-Struktur 1a sieben Radsatzebenen Z1 - Z7 zur Bereitstellung von sechs Vorwärtsgängen 1G - 6G und einem Rückwärtsgang RG. Ein Verbrennungsmotor VM, bzw. dessen Kurbelwelle, ist über ein als Motor- bzw. Anfahrkupplung ausgebildetes Anfahrelement K1 mit einer Getriebeeingangswelle W1, welche die Hybridantrieb-Struktur 1a durchsetzt, verbindbar. Axial dahinter ist eine Getriebeausgangswelle W2 angeordnet. Die erste Getriebeeingangswelle W1 ist eingangsseitig koaxial von einer als Hohlwelle ausgebildeten zweiten Getriebeeingangswelle W3 umgeben, auf der eine Elektromaschine EM 1 bzw. deren Rotor befestigt ist. Achsparallel dazu befindet sich eine Vorgelegewelle W4.

Die erste, getriebeeingangsseitige Radsatzebene Z1 ist durch ein mit der Hohlwelle W3 drehfest verbundenes Festrad z11 und ein mit diesem kämmenden, auf der Vorgelegewelle W4 drehbar angeordneten Losrad z21 gebildet. Das Losrad z21 ist über eine als eine unsynchronisierte Klauenkupplung ausgebildete doppelseitig betätigbare Gangschaltvorrichtung S4 in einer ersten Schaltstellung mit der Vorgelegewelle W4 drehfest verbindbar. Das Zahnradpaar z11/z21 der Radsatzebene Z1 ist für einen zweiten Gang 2G ausgelegt.

Die zweite Radsatzebene Z2 umfasst ein auf der Hohlwelle W3 angeordnetes Festrad z12 und ein auf der Vorgelegewelle W4 sitzendes Losrad z22, welches mit der vierten Schaltvorrichtung S4 in einer zweiten Schaltstellung mit der Vorgelegewelle W4 drehfest verbindbar ist. Das Zahnradpaar z12/z22 der Radsatzebene Z2 ist für einen vierten Gang 4G ausgelegt.

Die Getriebeeingangswelle W1 tritt in Höhe einer ersten auf ihr angeordneten doppelseitig betätigbaren Gangschaltvorrichtung S1, die als eine Synchronisierung aufweist, aus der Hohlwelle W3 heraus. Über die Schaltvorrichtung S1 ist die Hohlwelle W3 und damit die Elektromaschine EM1 in einer ersten Schaltstellung mit der Getriebeeingangswelle W1 antriebswirksam verbindbar.

Die dritte Radsatzebene Z3 ist als ein Rückwärtsgang RG ausgebildet. Sie umfasst ein auf der Getriebeeingangswelle W1 angeordnetes Losrad z13, welches mit der ersten Schaltvorrichtung S1 in einer zweiten Schaltstellung mit der Getriebeeingangswelle W1 drehfest verbindbar ist. Das Losrad z13 befindet sich im Eingriff mit einem drehbar gelagerten Zwischenrad zR3 zur Drehrichtungsumkehr, welches seinerseits mit einem auf der Vorgelegewelle W4 angeordneten zugehörigen Festrad z23 kämmt.

Die vierte Radsatzebene Z4 umfasst ein Losrad z14 der Getriebeeingangswelle W1, welches mittels einer zweiten, als doppelseitig betätigbare Synchronisierung ausgebildeten Gangschaltvorrichtung S2 mit der Getriebeeingangswelle W1 in einer ersten Schaltstellung drehfest verbindbar ist, und ein zugehöriges Festrad z24 der Vorgelegewelle W4. Diese Zahnradpaar z14/z24 bildet eine Übersetzung für einen ersten Gang 1G.

Die fünfte Radsatzebene Z5 ist durch ein mit der Schaltvorrichtung S2 in einer zweiten Schaltstellung mit der Getriebeeingangswelle W1 drehfest verbindbares Losrad z15 und ein mit diesem kämmenden Festrad z25 auf der Vorgelegewelle W4 gebildet. Das Zahnradpaar z15/z22 bildet eine Übersetzung für einen dritten Gang 3G.

Die sechste Radsatzebene Z6 umfasst ein Losrad z16 der Getriebeeingangswelle W1, welches mittels einer dritten, als doppelseitig betätigbaren Synchronisierung ausgebildeten Gangschaltvorrichtung S3 mit der Getriebeeingangswelle W1 in einer ersten Schaltstellung drehfest verbindbar ist, und ein zugehöriges Festrad z26 der Vorgelegewelle W4. Diese Zahnradpaar z16/z26 bildet eine Übersetzung für einen sechsten Gang 6G.

In einer zweiten Schaltstellung stellt die Schaltvorrichtung S3 eine Direktverbindung zwischen der Getriebeeingangswelle W1 und der Getriebeausgangswelle W2 her. Diese Direktverbindung stellt einen fünften Gang 5G als Direktgang dar.

Die siebte Radsatzebene Z7 ist als eine Abtriebskonstante ausgebildet. Sie umfasst ein mit der Getriebeausgangswelle W2 verbundenes Festrad z17, welches im Zahneingriff mit einem mit der Vorgelegewelle W4 verbundenen Festrad z27 ist.

Die Fig. 2 zeigt eine beispielhafte Gangtabelle der Hybridantrieb-Struktur 1a. Die Tabelle ist von links nach rechts für verbrennungsmotorische Gänge (Spalte 1, Gangfolge VM) und von rechts nach links für separate elektrische und elektrischverbrennungsmotorisch gekoppelte Gänge (Spalte 8, Gangfolge EM) zu lesen. Bei den verbrennungsmotorischen Gängen wirkt der Verbrennungsmotor VM über eine in der ersten Spalte hinter dem jeweiligen Gang eingetragene Radsatzebene Z1 - Z6 zum Abtrieb. In der zweiten Spalte ist beispielhaft eine Übersetzung i und in der dritten Spalte ein zugehöriger Stufensprung eingetragen, woraus sich in diesem Fall eine Gesamtspreizung i_ges=7,05 ergibt. Der fünfte Gang 5G weist als ein Direktgang die Übersetzung i=1 auf: Der sechste Gang 6G ist als ein Schellgang ausgelegt. Die Getriebestufung ist annähernd geometrisch mit konstanten Sprüngen ausgelegt, so dass sich die Differenz der Höchstgeschwindigkeiten zwischen den Gängen mit steigendem Gang vergrößert. In den Spalten S1 bis S4 ist die jeweilige Schaltstellung "li" = links bzw. "re" = rechts der Gangschalteinrichtungen S1, S2, S3, S4 angegeben, wobei jeweils zu berücksichtigen ist, ob der Verbrennungsmotor VM, die Elektromaschine EM1 oder beide zu schalten sind.

Die verbrennungsmotorische Gangfolge beginnt beim ersten Gang 1G, der über die Synchronisierung S2 das Zahnrad z14 der Radsatzebene Z4 mit der Getriebeeingangswelle W1 und damit nach Schließen der Anfahrkupplung K1 kraftschlüssig mit dem Verbrennungsmotor verbindet. Der Kraftfluss verläuft über die Vorgelegewelle W4 und die Abtriebskonstante Z7 zur Getriebeausgangswelle W2. Der erste Gang 1G ist ein rein verbrennungsmotorischer Gang.

Der zweite Gang 2G ist wahlweise ein rein elektrischer Gang oder ein gekoppelter Gang. Dementsprechend beginnt die elektromotorische Gangfolge beim zweiten elektrisch separaten Gang 2G, der dem die Klauenkupplung S4 das Zahnrad z21 der Radsatzebene Z1 mit der Vorgelegewelle W4 und damit mit der Elektromaschine EM1 verbindet. Der Kraftfluss verläuft wiederum wie bei allen Gängen außer dem Direktgang über die Vorgelegewelle W4 und die Abtriebskonstante Z7 zur Getriebeausgangswelle W2. Alternativ dazu ist der zweite Gang 2G von beiden Antriebsmaschinen VM, EM1 antreibbar. Dazu verbindet zusätzlich die Synchronisierung S1 die Getriebeeingangswelle W1 mit der Hohlwelle W3, so dass sich die beiden Antriebsmomente überlagernd addieren.

Es folgt der dritte Gang 3G als rein verbrennungsmotorischer Gang, der vierte Gang 4G als wahlweise elektrischer oder gekoppelter Gang, der fünfte Gang 5G (Direktgang) und der sechste Gang 6G als verbrennungsmotorische Gänge. Der Rückwärtsgang RG kann entweder über die Synchronisierung S1 verbrennungsmotorisch oder über die Klauenkupplung S4 und eine Drehrichtungsumkehr der Elektromaschine EM1 rein elektrisch geschaltet betrieben werden. Bei diesem Schaltschema sind somit der zweite Gang 2G und der vierte Gang 4G wahlweise mit Unterstützung des Elektroantriebs oder rein elektrisch betreibbar. Wahlweise ist elektrisches Rückwärtsfahren möglich. Da keine gekoppelten Gänge aufeinander folgen, ist durchgängig mit Hilfe einer geeigneten Ansteuerung eine Zugkraftunterstützung über die jeweils andere Antriebsquelle beim Gangwechsel möglich.

Im Folgenden werden jeweils die wesentlichen Unterschiede einzelner AMT-Hybrid-Varianten erläutert.

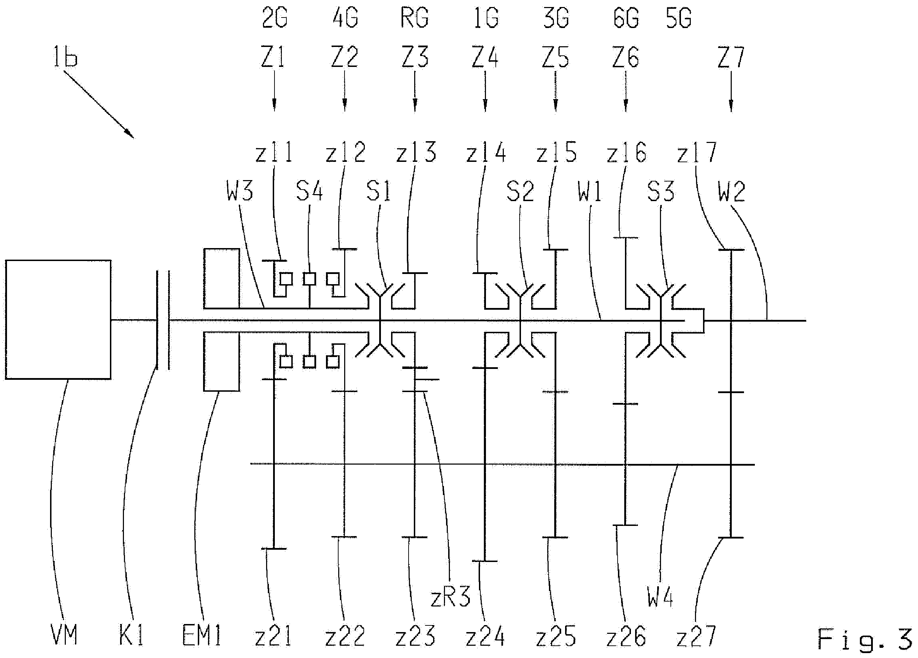

Die Fig. 3 zeigt eine mit Fig. 1 vergleichbare beispielhafte Hybridantrieb-Struktur 1b. Die Schaltvorrichtung S4 ist hier auf der Hohlwelle W3 anstatt auf der Vorgelegewelle W4 angeordnet. Alle Schaltelemente S1 - S4 befinden sich somit alle auf der An- und Abtriebsebene W1/W2/W3. Auf der Vorgelegewelle W4 sind nur Festräder z21, z22, z23, z24, z25, z26, z27 angeordnet.

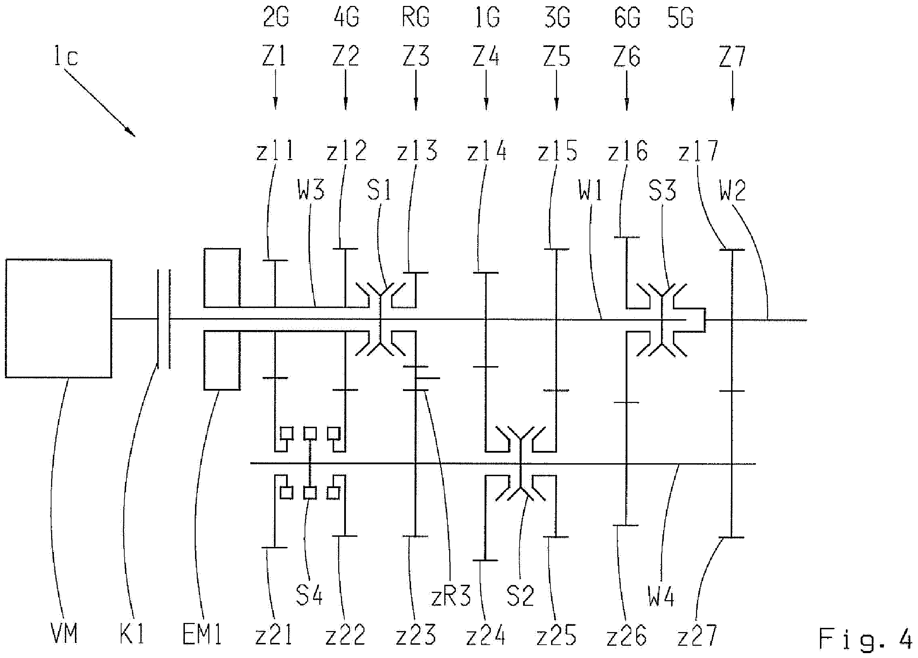

Fig. 4 zeigt eine vergleichbare beispielhafte Hybridantrieb-Struktur 1c, bei der jedoch jeweils zwei Schaltvorrichtungen S1 und S3 bzw. S2 und S4 auf der An- und Abtriebsebene W1/W2/W3 bzw. auf der der Vorgelegewelle W4 angeordnet sind. Die Schaltelemente S1 - S4 sind somit auf der An- und Abtriebsebene W1/W2/W3 und auf der Vorgelegewelle W4 gleichmäßig verteilt. Dabei ist auf der Vorgelegewelle W4 eine Klauenkupplung S4 und eine synchronisiertes Schaltelement S2 angeordnet, währen auf der Getriebeeingangswelle W1 zwei synchronisierte Schaltelemente S1 und S3 vorhanden sind. In einer weiteren von Fig. 4 ausgehenden, nicht abgebildeten Ausgestaltung, ist die Klauenkupplung S4 nicht auf der Vorgelegewelle W4 sondern auf der zweiten Getriebeeingangswelle W3 entsprechend Fig. 3 angeordnet.

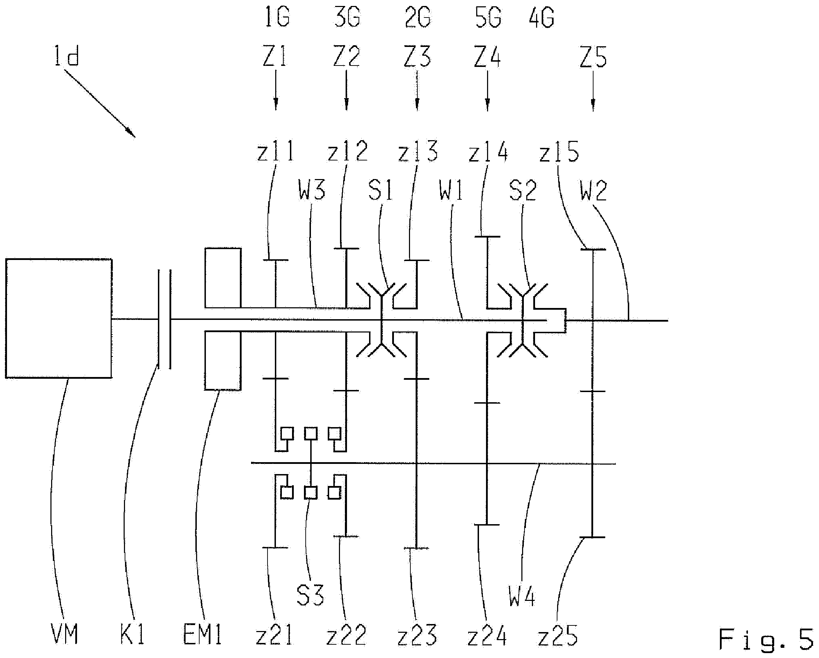

Fig. 5 zeigt eine beispielhafte Hybridantrieb-Struktur 1d mit fünf Vorwärtsgängen 1G - 5G und ohne Rückwärtsgang. Der vierte Gang 4G ist ein Direktgang, der durch ein Verbinden der Getriebeeingangswelle W1 mit der Antriebswelle W2 mittels des Schaltelements S2 geschaltet wird. Es sind vier Radsatzebenen Z1 - Z4 für Vorwärtsgänge und eine Abtriebskonstante Z5 angeordnet. Das Rückwärtsfahren ist nur elektrisch möglich (Plug-In-Hybrid). In einer weiteren von Fig. 5 ausgehenden, nicht abgebildeten Ausgestaltung, ist die Klauenkupplung S3 nicht auf der Vorgelegewelle W4 sondern auf der zweiten Getriebeeingangswelle W3 analog zu der Anordnung der Klauenkupplung S4 auf der Getriebeeingangswelle W3 aus Fig. 3 angeordnet.

Die Hybridantrieb-Strukturen 1a - 1d sind als Antriebsstränge mit koaxialem Antrieb und Abtrieb ausgebildet. Die nachfolgend beschriebenen Hybridantrieb-Strukturen 1e - 1k sind hingegen mit achsversetztem Abtrieb ausgebildet.

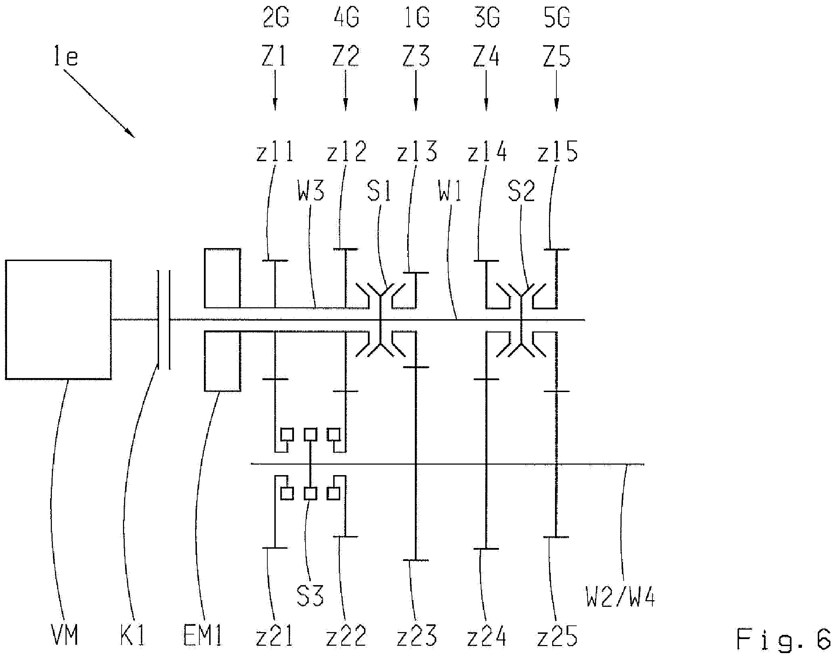

Fig. 6 zeigt demnach eine beispielhafte Hybridantrieb-Struktur 1e, bei der die Getriebeausgangswelle W2 als eine Vorgelegewelle W2/W4 ausgebildet ist. Die Hybridantrieb-Struktur 1e weist fünf Radsatzebenen Z1 - Z5 für fünf Vorwärtsgänge 1G - 5G auf. Ein separater Rückwärtsgang ist nicht vorgesehen. Elektrisches Rückwärtsfahren ist wiederum möglich. Auf der Getriebeeingangswelle W1 sind zwei synchronisierte Schaltelemente S1, S2 und auf der Vorgelegewelle W2/W4 ist eine Klauenkupplung S3 als Gangschaltelement angeordnet. In einer weiteren von Fig. 6 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

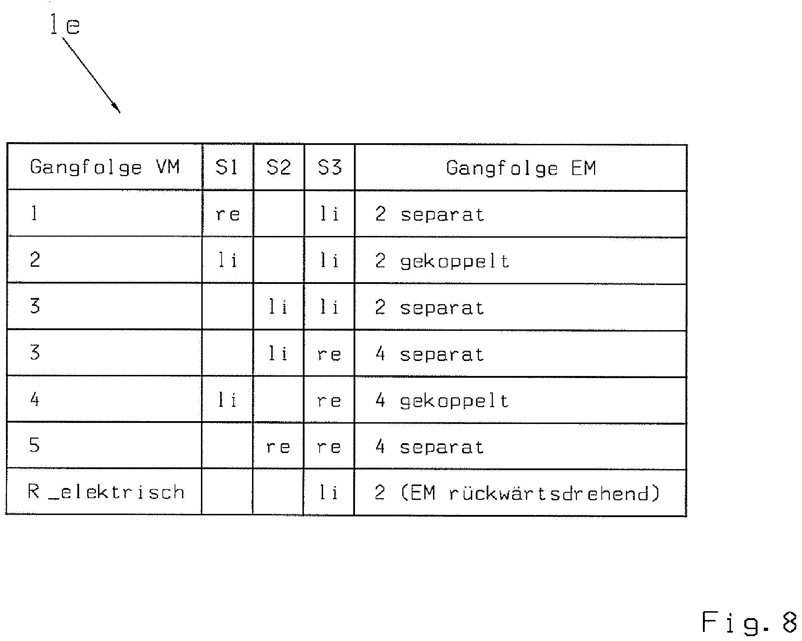

Eine Schalttopologie des Hybridantriebs gemäß Fig. 6 zeigt die Fig. 7. Darin ist zum einen die schaltbare Ankopplung der Elektromaschine EM1 über die Hohlwelle W3 und das zentrale Schaltelement S1 an den Antriebsstrang, zum anderen die Schaltung von zwei elektrischen Gängen - hier die Gänge 2G und 4G - über das Schaltelement S3 verdeutlicht. Der Abtrieb führt über die Ausgangswelle W2. Die Gänge 2G und 4G können somit rein elektrisch oder mittels des Schaltelementes S1 auch mit dem Verbrennungsmotor VM gekoppelt angetrieben werden. Der verbrennungsmotorische Zweig führt wiederum über das Schaltelement S1 zu den übrigen Gängen - hier die Gänge 1G, 3G und 5G zum Abtrieb W2. Das Aufbauprinzip ist sinngemäß auch auf die anderen Hybridantrieb-Strukturen 1a - 1k übertragbar. Dies wird auch bei einer vergleichenden Betrachtung der zugehörigen Gangtabelle der Hybridantrieb-Struktur 1e in Fig. 8 mit der Gangtabelle der Hybridantrieb-Struktur 1a in Fig. 2 deutlich. Die Gangtabelle in Fig. 8, deren Textinformationen ausdrücklich Inhalt der Beschreibung sind, verdeutlicht die beschriebene Gangfolge vor allem hinsichtlich der Schaltstellung der Schaltelemente S1, S2 und S3.

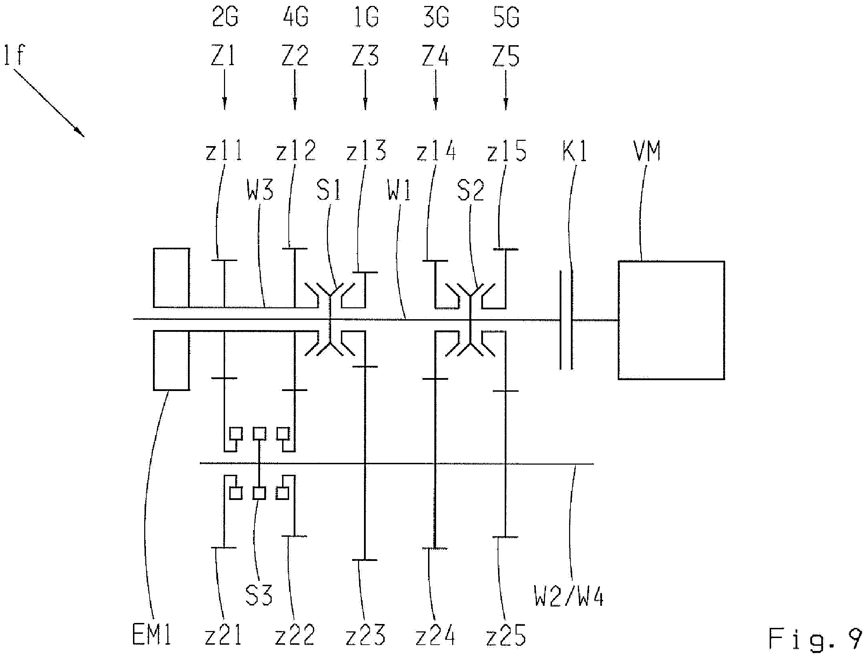

Eine in Fig. 9 gezeigte beispielhafte Hybridantrieb-Struktur 1f illustriert die Möglichkeit einer alternativen Anordnung der Hybrid-Antriebsquellen Verbrennungsmotor VM und Elektromaschine EM1 in einer Anordnung mit achsversetztem Abtrieb. Der Verbrennungsmotor VM und die zugehörige Anfahrkupplung K1 sind der Elektromaschine EM1 axial gegenüber angeordnet. Im Übrigen entspricht der Radsatz der Hybridantrieb-Struktur 1e von Fig. 6, auf deren Beschreibung verwiesen wird. In einer weiteren von Fig. 9 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

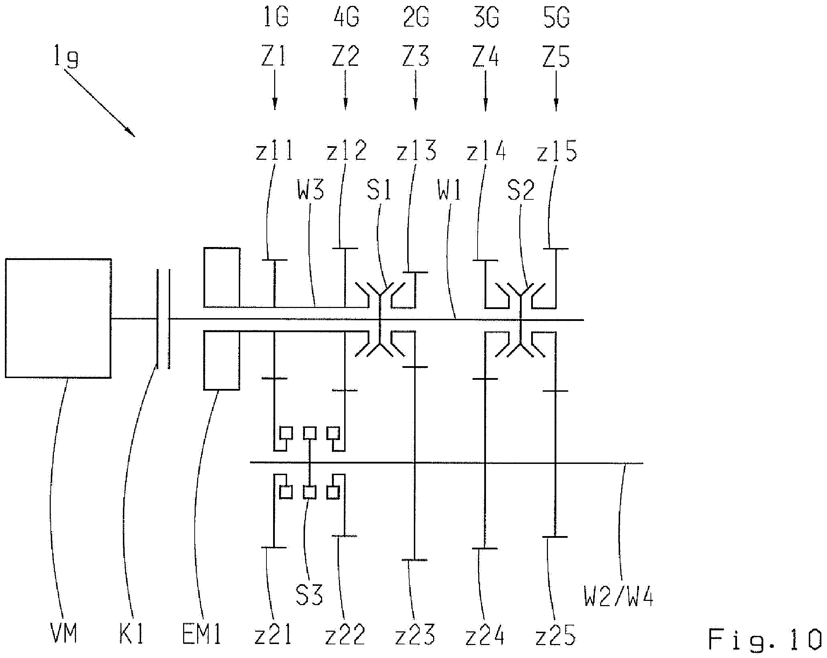

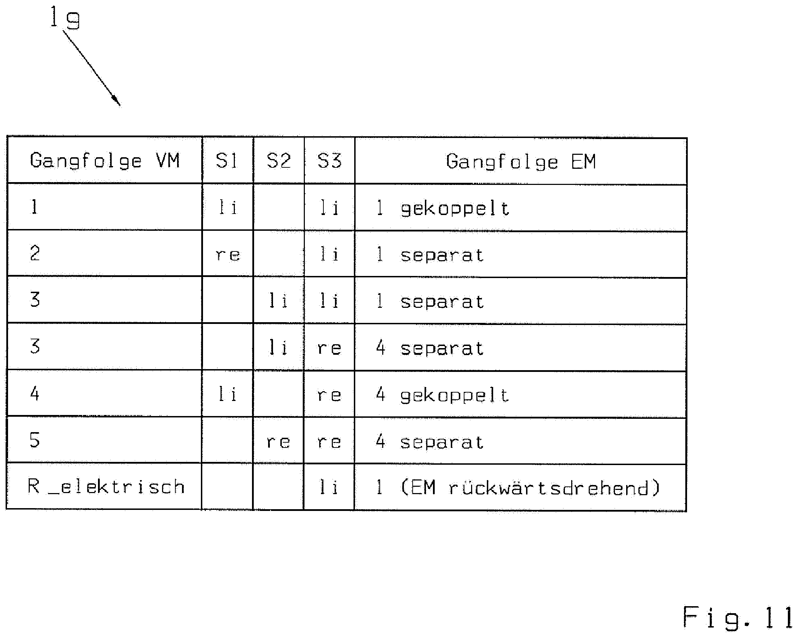

Fig. 10 zeigt eine beispielhafte Hybridantrieb-Struktur 1g, die mit der Hybridantrieb-Struktur 1e von Fig. 6 weitgehend baugleich ist, allerdings eine veränderte Gangfolge besitzt. Es ist lediglich die Anordnung des ersten Gangs 1G und des zweiten Gangs 2G vertauscht. Die Zahnräder des ersten Gangs 1G befinden sich bei der Hybridantrieb-Struktur 1g axial dicht an der Elektromaschine EM1. Dies wird durch das zugehörige Schaltschema in Fig. 11 im Vergleich zum Schaltschema in Fig. 8 ersichtlich und zeigt, dass die Gänge unter der Randbedingung, dass gekoppelte Gänge nicht nebeneinander liegen sollten, um eine vollwertige Zugkraftauffüllung beim Gangwechsel mittels des jeweils anderen Aggregates VM bzw. EM1 zu ermöglichen, auf die vorhandenen Zahnradpaare beliebig verteilbar sind. Bei der Hybridantrieb-Struktur 1g liegen die elektrischen bzw. gekoppelten Gänge sogar zwei Gangstufen auseinander. Auch bei der Fig. 8 gilt der Textbestandteil als Beschreibungsbestandteil. In einer weiteren von Fig. 10 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

Fig. 12 zeigt eine erste erfindungsgemäße Hybridantrieb-Struktur 1h, die als kompakt bauender "0K-ISG"- Hybrid ausgebildet ist. Ein Anfahrelement K1 zwischen dem Verbrennungsmotor VM und der Getriebeeingangswelle W1 entfällt. Der Verbrennungsmotor VM ist unmittelbar, d.h. nicht schaltbar mit der Getriebeeingangswelle W1 verbunden und dient als reiner mechanischer Rangeextender. Es sind lediglich drei Radsatzebenen Z1, Z2, Z3 für drei Vorwärtsgänge 1G, 2G, 3G angeordnet, die über zwei unsynchronisierte Klauenkupplungen S1, S2 geschaltet sind. Die Synchronisierung beim Gangwechsel erfolgt durch eine Drehzahlregulierung des Verbrennungsmotors VM. Die Elektromaschine EM1 startet den Verbrennungsmotor VM und fungiert als Anfahrelement sowohl für die Vorwärtsfahrt als auch für die Rückwärtsfahrt. Gegebenenfalls kann ein nicht dargestellter zusätzlicher Startergenerator vorgesehen sein, um den Verrennungsmotor VM auch zugkraftunterstützt starten zu können. In einer weiteren von Fig. 12 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

Fig. 13 zeigt eine Gangtabelle für die Hybridantrieb-Struktur 1h gemäß Fig. 12. Durch eine Verbindung der Elektromaschine EM1 mit dem Verbrennungsmotor VM über die Schaltstellung "li" der Schaltvorrichtung S1 kann die Elektromaschine EM1 ohne Kraftfluss zum Abtrieb W2 als Generator angetrieben werden, um einen Energiespeicher, insbesondere eine Fahrzeugbatterie, zu laden oder Verbraucher im Bordnetz zu versorgen. Durch Schalten des Schaltelementes S2=li ist ein rein elektrisches Anfahren im ersten Gang 1G möglich. Durch zusätzliches Zuschalten des Verbrennungsmotors VM durch die Schaltstellung S1=li wird ein gekoppelter erster Gang 1G geschaltet. Der zweite Gang 2G ist ein rein verbrennungsmotorischer Gang. Der dritte Gang 3G kann wiederum rein elektrisch oder gekoppelt verbrennungsmotorisch-elektrisch angetrieben sein. Der rein elektrische Anfahrgang 1G kann durch eine Drehrichtungsumkehr der Elektromaschine EM1 als Rückwärtsgang genutzt werden.

Drei weitere Hybridantrieb-Strukturen 1i, 1j und 1k zeigen einen AMT-Hybrid-Antrieb mit einem erweiterten Elektroantrieb. Darin ist zusätzlich eine zweite elektrische Maschine EM2 als ein Kurbelwellenstartergenerator (KSG) auf der Kurbelwelle des Verbrennungsmotors bzw. auf der mit der Kurbelwelle nicht schaltbar verbundenen Getriebeeingangswelle W1 angeordnet. Der Radsatz entspricht der in Fig. 12 gezeigten Hybridantrieb-Struktur 1h.

Die zweite Elektromaschine EM2 dient zum einen als ein Generator, zum anderen gegebenenfalls als Motor zum Starten des Verbrennungsmotors VM. Die zweite Elektromaschine EM2 ist vorzugsweise so ausgelegt, dass sie im Generatorbetrieb eine erforderliche mittlere elektrische Leistung zur Versorgung der ersten Elektromaschine EM1 als Traktionsmaschine für einen länger anhaltenden Stop-and-Go-Betrieb zuverlässig erzeugen kann. Dafür reicht in etwa eine um den Faktor 10 geringere Generatorleistung der EM2 im Vergleich zur Traktionsleistung der EM1 aus.

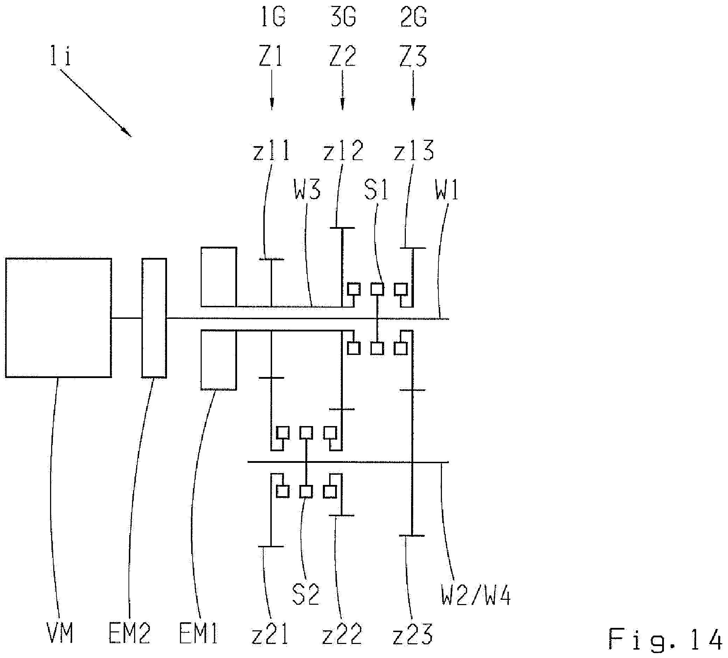

Bei der in Fig. 14 gezeigten erfindungsgemäßen Hybridantrieb-Struktur 1i sind der Verbrennungsmotor VM, die zweite Elektromaschine EM2 und die erste Elektromaschine EM1 axial hintereinander angeordnet. In einer weiteren von Fig. 14 ausgehenden nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

Fig. 15 zeigt eine zur Hybridantrieb-Struktur 1i zugehörige Gangtabelle. In einem ersten elektrischen Gang 1G, beispielsweise für den Stop-and-Go-Verkehr, wird die elektrische Traktionsmaschine EM1 durch den Generator EM2 mit Strom versorgt. Der Verbrennungsmotor VM treibt dazu den Generator EM2 ohne Kraftflussverbindung zum Abtrieb an, so dass der Antrieb in einem emissionsarmen SerienhybridModus betrieben wird. Alternativ dazu kann der erste Gang 1G auch als ein aus einem Energiespeicher versorgter rein elektrischer Gang oder in einem Parallelhybridmodus als gekoppelter Gang, wie bereits oben beschrieben, angesteuert werden. Dazu wird die Getriebeeingangswelle W1 über das Schaltelement S1 mit der Hohlwelle W3 verbunden. Der folgende zweite Gang 2G ist ein verbrennungsmotorischer Gang, der dritte Gang wiederum rein elektrisch oder gekoppelt elektrischverbrennungsmoto-risch betriebener Gang. Der elektrische erste Gang 1G kann durch eine Drehrichtungsumkehr der Elektromaschine EM1 wiederum als ein Rückwärtsgang genutzt werden.

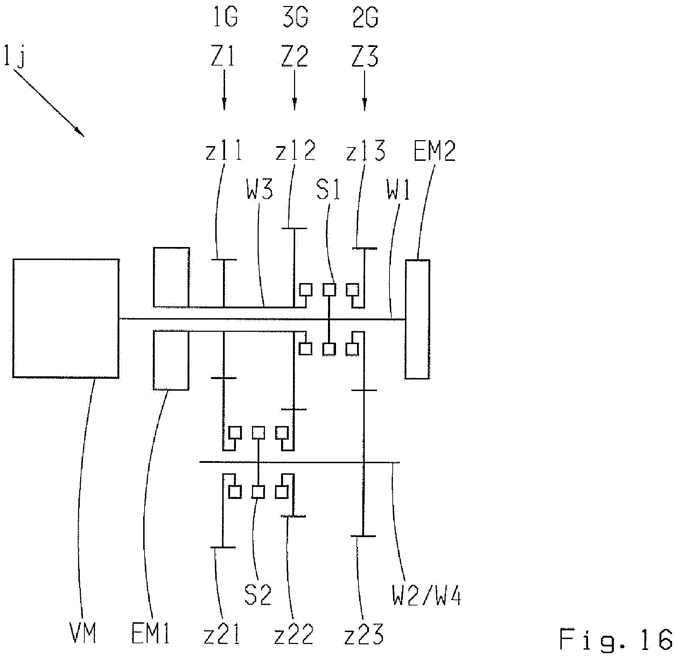

Bei der in Fig. 16 gezeigten erfindungsgemäßen Hybridantrieb-Struktur 1j ist die zweite Elektromaschine EM2 auf der axial gegenüberliegenden Getriebeseite angeordnet. Diese Anordnung stellt eine einfache modulare Erweiterung ohne konstruktive Änderungen der Hybridantrieb-Struktur 1h von Fig. 12 dar. Die ist sinnvoll nutzbar, wenn es die Bauraumerfordernisse in einem Kraftfahrzeug erfordern. In einer weiteren von Fig. 16 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

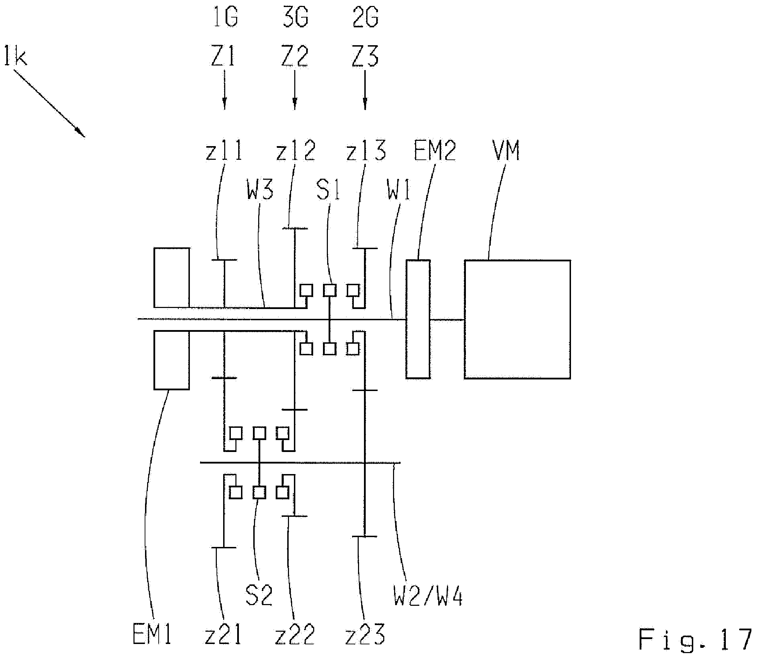

Außerdem sind bei der in Fig. 17 gezeigten erfindungsgemäßen Hybridantrieb-Struktur 1k die zweite Elektromaschine EM2 und der Verbrennungsmotor VM in vergleichbarer Weise zu der in Fig. 9 gezeigten Hybridantrieb-Struktur 1f auf der gegenüberliegenden Getriebeseite angeordnet. In einer weiteren von Fig. 17 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

Schließlich zeigt Fig. 18 eine Hybridantrieb-Struktur 1l mit koaxial sowie - nicht erfindungsgemäß - axial benachbart angeordneten Getriebeeingangswellen W1, W3'. Die erste Getriebeeingangswelle W1 ist von einem Verbrennungsmotor VM sowie von einer zweiten Elektromaschine EM2 antreibbar, und die zweite Getriebeeingangswelle W3' ist mittels einer ersten Elektromaschine EM1 antreibbar. Außerdem ist an der ersten Getriebeeingangswelle W1 eine Anfahrkupplung K1 angeordnet. Weiterhin ist eine Gangschaltvorrichtung S1 axial zwischen den beiden Getriebeeingangswellen W1 und W3' angeordnet, welche diese beiden Wellen W1, W3' in der linken Schaltstellung gemäß Fig. 18 antriebswirksam miteinander koppeln kann. In einer mittleren Schaltstellung nimmt diese Gangschaltvorrichtung S1 ihre Neutralstellung ein, während sie in ihrer rechten Schaltstellung der zweite Gang 2G eingelegt ist.

Das automatisierte Schaltgetriebe gemäß Fig. 18 ist ansonsten weitgehend identisch aufgebaut wie die Getriebe gemäß den Ausführungsbeispielen der Figuren 12, 14, 16 und 17. Es verfügt daher über eine achsparallel zu den beiden Getriebeeingangswellen W1, W3' angeordnete kombinierte Vorgelege- und Abtriebswelle W2/W4, drei Radsatzebenen Z1, Z2, Z3 mit Los- und Festrädern für drei Vorwärtsgänge 1G, 2G, 3G und einen elektromotorisch realisierbaren Rückwärtsgang. Dabei können der erste Gang 1G und der dritte Gang 3G rein elektromotorisch angetrieben werden, während alle drei Vorwärtsgänge 1G, 2G, 3G verbrennungsnotorisch antreibbar sind. Zum Schalten der Gänge ist auf der Vorgelegewelle W2/W4 eine ebenso als Klauenkupplung ausgebildete zweite Gangschaltvorrichtung S2 angeordnet. Weiter zeigt Fig. 18, dass auf der Vorgelegewelle W2/W4 ein Abtriebszahnrad z28 befestigt ist, welches mit einer Antriebsverzahnung z29 am Gehäuse eines Differentialgetriebes D kämmt. Von diesem Differentialgetriebe D gehen in bekannter Weise zwei Antriebswellen aw1, aw2 für zwei Räder r1, r2 eines Kraftfahrzeugs ab.

Die Anfahrkupplung K1 kann bei der Hybridantrieb-Struktur 1l der Fig. 18 Kosten und Bauraum sparend entfallen, sofern anstelle dieser Anfahrkupplung K1 eine zweite Elektromaschine EM2 so angeordnet ist, dass diese die erste Getriebeeingangswelle W1 antreiben kann, beispielsweise zum Synchronisieren des zweiten Gangs 2G.

Alternativ dazu kann beim Vorhandensein der Anfahrkupplung K1 an der ersten Getriebeeingangswelle W1 auf die zweite Elektromaschine EM2 Kosten und Bauraum sparend verzichtet werden, da die Synchronisierung des zweiten Gangs 2G mittels des Verbrennungsmotors VM und einer schlupfenden Anfahrkupplung K1 erfolgen kann.

### Bezugszeichenliste

- 1a - 1l: Hybridantrieb-Strukturen
- 1G - 6G: Vorwärtsgang
- aw1, aw2: Antriebswelle
- EM1: Elektromaschine
- EM2: Elektromaschine
- D: Differentialgetriebe
- i: Übersetzung
- i_ges: Getriebespreizung
- K1: Anfahrelement, Anfahrkupplung, Motorkupplung
- RG: Rückwärtsgang
- r1, r2: Fahrzeugrad
- S1 - S4: Gangschaltvorrichtung
- VM: Verbrennungsmotor
- W1: Erste Getriebeeingangswelle
- W2: Getriebeausgangswelle, Getriebeabtrieb
- W3: Zweite Getriebeeingangswelle, Hohlwelle
- W3': Zweite Getriebeeingangswelle
- W4: Vorgelegewelle
- Z1 - Z7: Radsatzebene
- z11 - z17: Zahnrad
- z21 - z29: Zahnrad
- zR3: Zahnrad

## Patentansprüche

1. Hybridantrieb mit einem automatisierten Schaltgetriebe, beispielsweise für ein Kraftfahrzeug, mit einem Verbrennungsmotor (VM), der mit wenigstens einer ersten Getriebeeingangswelle (W1) triebverbunden ist, mit einem Elektroantrieb, der wenigstens eine Elektromaschine (EM1) aufweist, die mit einer zweiten Getriebeeingangswelle (W3; W3') triebverbunden ist, mit in insgesamt drei Radsatzebenen (Z1 - Z3) angeordneten Losrädern und Festrädern (z11 - z13, z21 - z23, zR3), mit mehreren Gangschaltvorrichtungen (S1 - S4), und mit einer Getriebeausgangswelle (W2), wobei die beiden Getriebeeingangswellen (W1, W3;) koaxial zueinander angeordnet sind, und wobei eine Gangschaltvorrichtung (S1) in einer ihrer Schaltstellungen die beiden Getriebeeingangswellen (W1, W3) antriebswirksam miteinander verbindet, und in einer anderen Schaltstellung einen Gang schaltet, wobei
- die zweite Getriebeeingangswelle (W3) als Hohlwelle ausgebildet ist, welche die erste Getriebeeingangswelle (W1) zumindest abschnittweise koaxial umgibt und mit der ersten Getriebeeingangswelle (W1) mittels der Gangschaltvorrichtung (S1) koppelbar ist,
- auf der der als Hohlwelle ausgebildeten zweiten Getriebeeingangswelle (W3) jeweils ein Festrad oder ein Losrad (z11, z12, z21, z22) einer ersten Radsatzebenen und einer zweiten Radsatzebene (Z1, Z2) der drei Radsatzebenen (Z1, Z2, Z3) angeordnet ist,
- die Getriebeausgangswelle (W2) einen zu den Getriebeeingangswellen (W1, W3) achsversetzten Getriebeabtrieb bildet, und
- insgesamt drei Vorwärtsgänge geschaltet werden können.

2. Hybridantrieb nach Anspruch 1, **dadurch gekennzeichnet, dass** die Elektromaschine (EM1) mit der als Hohlwelle ausgebildeten zweiten Getriebeeingangswelle (W3) triebverbunden und mit der Getriebeeingangswelle (W1) mittels der Gangschaltvorrichtung (S1) koppelbar ist.

3. Hybridantrieb nach einem der Ansprüche 1 bis 2, **dadurch gekennzeichnet, dass** zwischen dem Verbrennungsmotor (VM) und der ersten Getriebeeingangswelle (W1) ein Anfahrelement (K1) angeordnet ist, über das der Verbrennungsmotor (VM) mit der ersten Getriebeeingangswelle (W1) wirkverbindbar ist.

4. Hybridantrieb nach einem der Ansprüche 1 oder 2, **dadurch gekennzeichnet, dass** der Verbrennungsmotor (VM) unmittelbar mit der ersten Getriebeeingangswelle (W1) wirkverbunden ist, und dass die Elektromaschine (EM1) als ein Anfahrelement ansteuerbar ist.

5. Hybridantrieb nach einem der Ansprüche 1 bis 4, **dadurch gekennzeichnet, dass** ein Rückwärtsgang mit einer Radsatzebene (Z1) eines Vorwärtsganges (1G, 2G) durch eine Drehrichtungsumkehr der Elektromaschine (EM1) realisierbar ist.

6. Hybridantrieb nach einem der Ansprüche 1 bis 5, **dadurch gekennzeichnet, dass** zumindest eine der Gangschaltvorrichtungen (S1 - S4) als eine Klauenkupplung ausgebildet ist, und dass die Elektromaschine (EM1) als ein Synchronisierungsmittel ansteuerbar ist.

7. Hybridantrieb nach einem der Ansprüche 1 bis 6, **dadurch gekennzeichnet, dass** die eine Elektromaschine (EM1) oder eine zweite Elektromaschine (EM2) als ein integrierter Startergenerator zum Starten des Verbrennungsmotors (VM) und/oder als ein Generator zum Laden eines Energiespeichers oder zur Versorgung eines Bordnetzes ansteuerbar ist.

8. Hybridantrieb nach einem der Ansprüche 1 bis 7, **dadurch gekennzeichnet, dass** zumindest teilweise die Elektromaschine (EM1) als ein Zugkraftunterstützungsmittel bei verbrennungsmotorischen Gangwechseln ansteuerbar ist, und dass der Verbrennungsmotor (VM) zumindest teilweise als ein Zugkraftunterstützungsmittel bei elektrischen Gangwechseln ansteuerbar ist.

9. Hybridantrieb nach einem der Ansprüche 1 bis 8, **dadurch gekennzeichnet, dass** der Elektroantrieb eine zweite Elektromaschine (EM2) aufweist,
und dass diese zweite Elektromaschine (EM2) auf der ersten Getriebeeingangswelle (W1) mit dem Verbrennungsmotor (VM) in Serie geschaltet ist.

10. Hybridantrieb nach Anspruch 9, **dadurch gekennzeichnet, dass** der Verbrennungsmotor (VM) und zumindest eine der beiden Elektromaschinen (EM1, EM2) des Elektroantriebs diametral gegenüberliegend angeordnet sind.

11. Hybridantrieb nach Anspruch 10, **dadurch gekennzeichnet, dass** der achsversetzte Getriebeabtrieb (W2) wahlweise auf der Seite der Elektromaschine (EM1) oder auf der der Elektromaschine (EM1) gegenüberliegenden Seite angeordnet ist.

## Claims

1. Hybrid drive having an automated change-speed gearbox, for example for a motor vehicle, having an internal combustion engine (VM) which is drive-connected to at least one first gearbox input shaft (W1), having an electric drive which has at least one electric machine (EM1) which is drive-connected to a second gearbox input shaft (W3; W3'), having movable gears and fixed gears (z11 - z13, z21 - z23, zR3) which are arranged in a total of three gear set planes (Z1 - Z3), having a plurality of gear shifting devices (S1 - S4), and having a gearbox output shaft (W2), wherein the two gearbox input shafts (W1, W3) are arranged coaxially to one another, and wherein one gear shifting device (S1) drive-connects the two gearbox input shafts (W1, W3) to one another in one of its shifting positions and selects a gear in another shifting position, wherein
- the second gearbox input shaft (W3) is designed as a hollow shaft which coaxially surrounds the first gearbox input shaft (W1) at least in certain portions and can be coupled to the first gearbox input shaft (W1) by means of the gear shifting device (S1),
- in each case a fixed gear or a movable gear (z11, z12, z21, z22) of a first gear set plane and of a second gear set plane (Z1, Z2) of the three gear set planes (Z1, Z2, Z3) is arranged on the second gearbox input shaft (W3) designed as a hollow shaft,
- the gearbox output shaft (W2) forms a gearbox output which is offset axially with respect to the gearbox input shafts (W1, W3), and
- a total of three forward gears can be selected.

2. Hybrid drive according to Claim 1, **characterized in that** the electric machine (EM1) is drive-connected to the second gearbox input shaft (W3) designed as a hollow shaft and can be coupled to the gearbox input shaft (W1) by means of the gear shifting device (S1).

3. Hybrid drive according to either of Claims 1 and 2, **characterized in that** a starting element (K1) is arranged between the internal combustion engine (VM) and the first gearbox input shaft (W1), via which starting element the internal combustion engine (VM) can be operatively connected to the first gearbox input shaft (W1).

4. Hybrid drive according to either of Claims 1 and 2, **characterized in that** the internal combustion engine (VM) is directly operatively connected to the first gearbox input shaft (W1), and **in that** the electric machine (EM1) can be actuated as a starting element.

5. Hybrid drive according to one of Claims 1 to 4, **characterized in that** a reverse gear can be realised by way of a gear set plane (Z1) of a forward gear (1G, 2G) as a result of reversal of direction of rotation of the electric machine (EM1).

6. Hybrid drive according to one of Claims 1 to 5, **characterized in that** at least one of the gear shifting devices (S1 - S4) is designed as a dog clutch, and **in that** the electric machine (EM1) can be actuated as a synchronizing means.

7. Hybrid drive according to one of Claims 1 to 6, **characterized in that** the one electric machine (EM1) or a second electric machine (EM2) can be actuated as an integrated starter generator for starting the internal combustion engine (VM) and/or as a generator for charging an energy store or for supplying a vehicle electrical system.

8. Hybrid drive according to one of Claims 1 to 7, **characterized in that** the electric machine (EM1) can be actuated at least partially as a tractive force assistance means during internal combustion engine gear changes, and **in that** the internal combustion engine (VM) can be actuated at least partially as a tractive force assistance means during electric gear changes.

9. Hybrid drive according to one of Claims 1 to 8, **characterized in that** the electric drive has a second electric machine (EM2), and **in that** this second electric machine (EM2) is connected in series with the internal combustion engine (VM) on the first gearbox input shaft (W1) .

10. Hybrid drive according to Claim 9, **characterized in that** the internal combustion engine (VM) and at least one of the two electric machines (EM1, EM2) of the electric drive are arranged diametrically opposite one another.

11. Hybrid drive according to Claim 10, **characterized in that** the axially offset gearbox output (W2) is arranged optionally on the side of the electric machine (EM1) or on the opposite side to the electric machine (EM1) .

## Revendications

1. Entraînement hybride muni d'une boîte de vitesses automatisée, destiné par exemple à un véhicule automobile,
l'entraînement hybride comprenant un moteur à combustion interne (VM) relié en entraînement à au moins un premier arbre d'entrée de boîte de vitesses (W1), un entraînement électrique comportant au moins une machine électrique (EM1) reliée en entraînement à un deuxième arbre d'entrée de boîte de vitesses (W3 ; W3'), des roues libres et des roues fixes (z11 - z13, z21 - z23, zR3) disposées dans un total de trois plans de paire de roues (Z1 - Z3), une pluralité de dispositifs de changement de vitesse (S1 - S4) et un arbre de sortie de boîte de vitesses (W2), les deux arbres d'entrée de boîte de vitesses (W1, W3) étant disposés coaxialement l'un à l'autre, et un dispositif de changement de vitesse (S1), dans l'une de ses positions de changement de vitesse, reliant entre eux en entraînement les deux arbres d'entrée de boîte de vitesses (W1, W3) et, dans une autre position de changement de vitesse, changeant une vitesse,
- le deuxième arbre d'entrée de boîte de vitesses (W3) étant conçu comme un arbre creux qui entoure au moins par endroits coaxialement le premier arbre d'entrée de boîte de vitesses (W1) et qui peut être accouplé au premier arbre d'entrée de boîte de vitesses (W1) à l'aide du dispositif de changement de vitesse (S1),
- une roue fixe ou une roue libre (z11, z12, z21, z22) d'un premier plan de paire de roues et d'un deuxième plan de paire de roues (Z1, Z2) des trois plans de paire de roues (Z1, Z2, Z3) est disposée sur le deuxième arbre d'entrée de boîte de vitesses (W3) conçu comme un arbre creux,
- l'arbre de sortie de boîte de vitesses (W2) formant une sortie de boîte de vitesses désaxée par rapport aux arbres d'entrée de boîte de vitesses (W1, W3), et
- un total de trois vitesses avant peut être commuté.

2. Entraînement hybride selon la revendication 1, **caractérisé en ce que** la machine électrique (EM1) est reliée en entraînement au deuxième arbre d'entrée de boîte de vitesses conçue comme un arbre creux (W3) et peut être accouplée en entraînement à l'arbre d'entrée de boîte de vitesses (W1) à l'aide du dispositif de changement de vitesse (S1).

3. Entraînement hybride selon l'une des revendications 1 à 2, **caractérisé en ce qu'**un élément de démarrage (K1) est disposé entre le moteur à combustion interne (VM) et le premier arbre d'entrée de boîte de vitesses (W1), lequel élément de démarrage relie fonctionnellement le moteur à combustion interne (VM) au premier arbre d'entrée de boîte de vitesses (W1) .

4. Entraînement hybride selon l'une des revendications 1 ou 2, **caractérisé en ce que** le moteur à combustion interne (VM) est relié fonctionnellement directement au premier arbre d'entrée de boîte de vitesses (W1) et la machine électrique (EM1) peut être activée en tant qu'élément de démarrage.

5. Entraînement hybride selon l'une des revendications 1 à 4, **caractérisé en ce qu'**une marche arrière peut être réalisée avec un plan de paire de roues (Z1) d'une marche avant (1G, 2G) par inversion du sens de rotation de la machine électrique (EM1).

6. Entraînement hybride selon l'une des revendications 1 à 5, **caractérisé en ce que** l'un au moins des dispositifs de changement de vitesse (S1 - S4) est conçu comme un crabot, et **en ce que** la machine électrique (EM1) est commandée comme un moyen de synchronisation.

7. Entraînement hybride selon l'une des revendications 1 à 6, **caractérisé en ce que** la machine électrique (EM1) ou une deuxième machine électrique (EM2) est utilisée comme générateur de démarrage intégré destiné à démarrer le moteur à combustion interne (VM) et/ou comme générateur destiné à charger un accumulateur d'énergie ou à alimenter un réseau de bord.

8. Entraînement hybride selon l'une des revendications 1 à 7, **caractérisé en ce que** la machine électrique (EM1) peut être commandée au moins partiellement comme un moyen d'assistance à la traction dans des changements de vitesses par moteur à combustion interne et **en ce que** le moteur à combustion interne (VM) peut être commandé au moins partiellement comme un moyen d'assistance à la traction dans le cas de changements de vitesses électriques.

9. Entraînement hybride selon l'une des revendications 1 à 8, **caractérisé en ce que** l'entraînement électrique comporte une deuxième machine électrique (EM2) et **en ce que** cette deuxième machine électrique (EM2) est montée en série avec le moteur à combustion interne (VM) sur le premier arbre d'entrée de boîte de vitesses (W1).

10. Entraînement hybride selon la revendication 9, **caractérisé en ce que** le moteur à combustion interne (VM) et l'une au moins des deux machines électriques (EM1, EM2) de l'entraînement électrique sont disposés de manière diamétralement opposée.

11. Entraînement hybride selon la revendication 10, **caractérisé en ce que** la sortie de boîte de vitesses désaxée (W2) est disposée au choix du côté de la machine électrique (EM1) ou du côté opposé à la machine électrique (EM1).
